# EUROPÄISCHE PATENTSCHRIFT

(11) **EP 3 704 002 B1**
(45) Veröffentlichungstag und Bekanntmachung des Hinweises auf die Patenterteilung: **15.06.2022**
(21) Anmeldenummer: 18749761.5
(22) Anmeldetag: 27.07.2018
(51) Int. Cl.: B62D 65/18

(54) **FLÄCHENSPEICHER SOWIE VERFAHREN ZUR FÖRDERUNG VON FAHRZEUGKAROSSERIEN ODER FAHRZEUGKAROSSERIEAUFNAHMEN**
FLÄCHENSPEICHER SOWIE VERFAHREN ZUR FÖRDERUNG VON FAHRZEUGKAROSSERIEN ODER FAHRZEUGKAROSSERIEAUFNAHMEN
DISPOSITIF DE STOCKAGE PLAN AINSI QUE PROCÉDÉ DE TRANSPORT DE CARROSSERIES DE VÉHICULE OU DE LOGEMENTS DE CARROSSERIE DE VÉHICULE

(30) Priorität: 07.08.2017 DE 102017117908
(43) Veröffentlichungstag der Anmeldung: 09.09.2020
(73) Patentinhaber: Eisenmann GmbH, 71032 Böblingen (DE)
(72) Erfinder: ROBBIN, Jörg, 72119 Ammerbuch (DE)
(74) Vertreter: Ostertag & Partner Patentanwälte mbB
(86) Internationale Anmeldenummer: PCT/EP2018/070516
(87) Internationale Veröffentlichungsnummer: WO 2019/030026

(56) Entgegenhaltungen:
- EP-A1- 2 746 193
- GB-A- 2 341 375
- US-A1- 2005 042 062
- US-A1- 2011 005 902

## Beschreibung

### HINTERGRUND DER ERFINDUNG

### 1. Gebiet der Erfindung

Die Erfindung betrifft einen Flächenspeicher zur Lagerung von Fahrzeugkarosserien, deren Längsausdehnung mindestens das Anderthalbfache der Querausdehnung beträgt, wobei der Flächenspeicher eine Lagerfläche mit mindestens zwei Speicherplätzen und zwei zugehörigen Fahrzeugkarosserieaufnahmen aufweist, wobei die Lagerfläche so ausgelegt ist, dass auf der Lagerfläche Fahrzeugkarosserien in einer Ebene auf den mindestens zwei Speicherplätzen auf jeweils einer der Fahrzeugkarosserieaufnahmen lagerbar sind, und mindestens ein mehrspuriges Flurförderfahrzeug umfasst, das mit der Fahrzeugkarosserie oder/und der Fahrzeugkarosserieaufnahme koppelbar ist.

### 2. Beschreibung des Standes der Technik

Auf dem Gebiet der Automobilfertigung ist es im Rahmen der Serienfertigung von Automobilfahrzeugen sinnvoll, zwischen verschiedenen Prozessen wie beispielsweise zwischen Rohbau und Lackierung, zwischen Lackierung und Endmontage oder generell zur Sequenzbildung für sich anschließende Fertigungsschritte Pufferspeicher für die Fahrzeugkarosserien vorzusehen. Hierfür wird heutzutage üblicherweise ein Hochregallager mit Regalbediengeräten als Abkoppelungspuffer zwischen einzelnen Prozessschritten und Fertigungsbereichen vorgesehen. Derartige Hochregallager benötigen zwar eine geringe Grundfläche, sind aber im Gegenzug aufwendig in der Herstellung und im Betrieb. Es muss ein kostenintensiver Stahlbau errichtet werden, der mit umfangreichen Brandschutzmaßnahmen und gegebenenfalls sogar mit Werkstückschutzvorrichtungen versehen wird. Ein solches Hochregallager bietet den Vorteil, dass die eingelagerten Fahrzeugkarosserien in beliebiger Abfolge durch ein oder zwei Regalbediengeräte pro Gasse entnehmbar sind. Nachdem die Regalbediengeräte für Fahrzeugkarosserien in einem derartigen Hochregallager aufwendig in Herstellung und Betrieb sind, wird die Anzahl an Regalbediengeräten gering gehalten. Umlagerungen innerhalb des Hochregallagers sind dementsprechend schwierig durchzuführen und werden in der Regel vermieden. Das Hochregallager benötigt für die Anlieferung und den Abtransport der Fahrzeugkarosserien eine Umsetzeinrichtung, die eine Schnittstelle zwischen der Fördertechnik in der Ebene und dem Regalbediengerät bildet. Pufferplätze innerhalb des Hochregallagers im Sinne von freien Speicherplätzen müssen bei der Planung und Errichtung des Gebäudes vorgesehen werden und sind stets vorhanden, auch wenn diese momentan nicht benötigt werden. Die Speicherplätze können auch nicht zwischenzeitlich einer anderen Nutzung zugeführt werden. Dementsprechend muss die Gesamtspeicherkapazität des Hochregallagers für die maximal geplante Größe ausgelegt sein.

Ein solches Hochregallager für eine Kraftfahrzeugfertigung kann beispielsweise sechs Regalbediengeräte aufweisen, die mit beispielsweise 120 Antrieben in der Vorzone des Hochregallagers für das Umsetzen der Fahrzeugkarosserien gekoppelt sind. Um mit einem derartigen Hochregallager eine Sequenzspeicherung mit max. 1000 Speicherplätzen zu realisieren, sind weitere 150 Antriebe notwendig, sodass sich insgesamt 270 Antriebe mit üblicherweise 12 verschiedenen Antriebstypen ergeben.

Alternativ sind sogenannte Speicherbahnen bekannt, die in einer Bewegungsrichtung die Fahrzeugkarosserien nach dem FIFO-Prinzip einreihen. Eine Speicherbahn benötigt entsprechend viel Grundfläche, aber nur einen einfachen Brandschutz und eine wenig aufwendige Unterkonstruktion. Es sind entsprechend viele Handhabungsgeräte zur Bewegung der Fahrzeugkarosserien innerhalb der Speicherbahn vorzusehen. Auch hier muss der Pufferspeicher für die maximale Größe von vornherein für die maximale Größe ausgelegt werden und leerstehende Speicherplätze können nicht zeitweilig anders eingesetzt werden.

Die Druckschrift US 2005/0042062 A1 beschreibt ein System zum Zwischenlagern von Automobilkarosserien.

Die Druckschrift US 2011/0005902 A1 beschreibt einen Rollenbahnförderer zum Transportieren von Skids in der Automobilindustrie.

### ZUSAMMENFASSUNG DER ERFINDUNG

Es ist eine Aufgabe der Erfindung, einen Pufferspeicher für Fahrzeugkarosserien der eingangs genannten Art anzugeben, der mit geringen Investitionen hinsichtlich Brandschutz oder Sicherheitstechnik zu realisieren ist und gleichzeitig eine dynamische Allokation von Speicherplätzen für Fahrzeugkarosserien ermöglicht.

Diese Aufgabe wird durch einen Flächenspeicher zur Lagerung von Fahrzeugkarosserien, deren Längsausdehnung mindestens das Anderthalbfache der Querausdehnung beträgt, gelöst. Der erfindungsgemäße Flächenspeicher weist eine Lagerfläche mit mindestens zwei Speicherplätzen und zwei zugehörigen Fahrzeugkarosserieaufnahmen auf. Die Fahrzeugkarosserieaufnahmen sind so gestaltet, dass sie jeweils mindestens eine Fahrzeugkarosserie aufnehmen können, sodass ein Speicherplatz belegt ist, wenn an ihm eine Fahrzeugkarosserieaufnahme mit einer damit gekoppelten Fahrzeugkarosserie angeordnet ist. Die Lagerfläche des Flächenspeichers ist so ausgelegt, dass auf der Lagerfläche Fahrzeugkarosserien in einer Ebene auf den mindestens zwei Speicherplätzen auf jeweils einer der Fahrzeugkarosserieaufnahmen lagerbar sind. Der Flächenspeicher weist mindestens ein mehrspuriges Flurförderfahrzeuge auf, das mit einer Fahrzeugkarosserie oder/und der Fahrzeugkarosserieaufnahme koppelbar ist.

Erfindungsgemäß ist vorgesehen, dass das Flurförderfahrzeug derart für ein ominidirektionales Fahren ausgelegt ist, dass die Förderrichtung unabhängig von der Ausrichtung des Flurförderfahrzeugs wählbar ist und bei dem Flurförderfahrzeug mit gekoppelter Fahrzeugkarosserie oder/und Fahrzeugkarosserieaufnahme eine Förderrichtungsänderung ohne eine Änderung der Relativausrichtung von Fahrzeugkarosserie oder/und Fahrzeugkarosserieaufnahme und Flurförderfahrzeug durchführbar ist.

Die vorliegende Erfindung bezieht sich auf Fahrzeugkarosserien mit Verhältnissen von Längsausdehnung zu Querausdehnung größer als 1:1,5, also beispielsweise 1:1,5 bis 1:1,9 wie sie beispielsweise bei der Fahrzeugklasse der Kleinwagen anzutreffen sind, 1:1,9 bis 1:2,6 wie sie beispielsweise bei Mittelklassewagen vorherrschen und 1:2,6 bis 1:3,2, wie sie bei Oberklassewagen vorkommen. Die Abmessungen des Flurförderfahrzeugs können im Wesentlichen den Abmessungen der zu befördernden Fahrzeugkarosserie und weiteren Randbedingungen wie beispielsweise der geforderten Flexibilität der gesamten Speicheranlage entsprechen.

Die Kopplung des Flurförderfahrzeugs mit der Fahrzeugkarosserie oder/und Fahrzeugkarosserieaufnahme kann auf verschiedene Weise realisiert sein. Beispielsweise kann die Fahrzeugkarosserie oder/und Fahrzeugkarosserieaufnahme auf dem Flurförderfahrzeug ablegbar sein. Alternativ kann eine anderweitige mechanische, elektrische und magnetische Kopplung stattfinden.

Unter dem Begriff Fahrzeugkarosserieaufnahme kann beispielsweise eine mobile oder ortsfeste Fahrzeugkarosserieaufnahme wie beispielsweise ein Transportgestell, ein Lagergestell oder/und ein sogenannter Skid verstanden werden.

Unter dem Begriff Flurförderfahrzeug wird vorliegend vorrangig ein fahrerloses Transportfahrzeug verstanden, das sich in der Fläche - im Unterschied zu einem Regalbediengerät - fortbewegt. Dabei können über Rampen oder Aufzüge auch Höhenunterschiede überwunden werden können. Das Flurförderfahrzeug kann als sich autonom bewegendes Fahrzeug oder als fernsteuerbares Fahrzeug ausgelegt sein.

Unter dem Begriff omnidirektionales Fahren soll vorliegend verstanden werden, dass die Förderrichtung unabhängig von der Ausrichtung des Flurförderfahrzeugs wählbar ist. Das Flurförderfahrzeug kann also beispielsweise in Nord-Süd-Orientierung ausgerichtet sein, aber eine Förderrichtung in Ost-West-Orientierung wählen. Dies hat auch zur Folge, dass das Flurförderfahrzeug mit gekoppelter Fahrzeugkarosserieaufnahme die Orientierung des Flurförderfahrzeugs und damit auch der Fahrzeugkarosserieaufnahme beispielsweise in Nord-Süd-Richtung beibehalten kann, gleichzeitig aber beispielsweise in Ost-West-Richtung fördern kann.

Ein Speicherplatz bezeichnet den Ort und den entsprechenden Raumbedarf für eine Fahrzeugkarosserieaufnahme mit einer zugehörigen Fahrzeugkarosserie. Einem einzelnen Speicherplatz kann je nach Ausführung des Flurförderfahrzeugs und den vorgesehenen Förderrichtungen und -funktionen ein unterschiedlich großer Funktionszuschlag zugeordnet sein, der ausgehend von den Fahrzeugkarosseriedimensionen berücksichtigt, wieviel Abstand zu benachbarten Speicherplätzen beispielsweise für Drehbewegungen oder Richtungsänderungsbewegungen einzuhalten ist.

Die Lagerfläche ist die gesamte Fläche, die von den belegbaren Speicherplätzen eingenommen wird. Die Lagerfläche kann ein zusammenhängendes einteiliges Lagerflächensegment sein oder aus einzelnen Lagerflächensegmenten zusammengesetzt sein, wobei die Lagerflächensegmente aneinandergrenzen oder auch entfernt voneinander, auch auf verschiedenen Ebenen liegend angeordnet sein können. Die einzelnen Lagerflächensegmente können funktionstechnisch identisch oder auch für verschiedene Funktionen wie beispielsweise Pufferung, Sequenzierung, Abkühlen, etc. vorgesehen sein.

In Kombination mit Fahrzeugkarosserien, deren Längsausdehnung mindestens das Anderthalbfache der Querausdehnung beträgt, ist das omnidiraktionale Fahren bzw. Fördern besonders vorteilhaft. Auf diese Art und Weise ist es möglich, die Fahrzeugkarosserien auf einer zwar vergleichsweise großen Grundfläche verglichen mit der Grundfläche eines Hochregallagers anzuordnen, die Anordnung der Fahrzeugkarosserien ist aber in vielerlei Hinsicht variabel. Beispielsweise ist die gesamte Speicherfläche oder Teile davon auf einfache Art und Weise verlagerbar. Die Speicherflächen können mittels der omnidirektionalen Fördermöglichkeit aus beliebigen Richtungen angefahren werden. So ist es beispielsweise möglich eine Fahrzeugkarosserie mit der zugehörigen Fahrzeugkarosserieaufnahme in Längsrichtung der Fahrzeugkarosserie zu fördern oder auf längeren Förderstrecken zu fördern. Dies hat den Vorteil, dass die Förderstrecken in ihrer Breite lediglich der Querausdehnung der Fahrzeugkarosserie entsprechen müssen. Gleichzeitig kann ein nur seitlich zugänglicher Speicherplatz mit einer Fahrzeugkarosserie durch eine seitliche Förderung belegt werden. Die Anzahl der Speicherflächenspeicherplätze ist bei gleicher Gesamtgrundfläche variabel und kann somit für verschiedene Fahrzeugkarosseriegrößen und Formen oder Speicherarten angepasst werden. Auch kann die Gesamtgrundfläche des Flächenspeichers auf einfache Art und Weise vergrößert oder verkleinert werden.

Bei einer Weiterbildung der Erfindung kann vorgesehen sein, dass das Flurförderfahrzeug und die Fahrzeugkarosserie oder/und Fahrzeugkarosserieaufnahme so ausgelegt sind, dass die Fahrzeugkarosserie oder/und Fahrzeugkarosserieaufnahme von dem Flurförderfahrzeuge unterfahrbar ist. Auf diese Art und Weise kann einerseits die Kopplung zwischen Fahrzeugkarosserie bzw. Fahrzeugkarosserieaufnahme und Flurförderfahrzeug auf einfache Art und Weise - nämlich durch Unterfahren der Fahrzeugkarosserie bzw. der Fahrzeugkarosserieaufnahme - erfolgen. In bevorzugter Weise weist das Flurförderfahrzeug eine Hubvorrichtung auf, mittels derer nach dem Unterfahren der Fahrzeugkarosserie oder/und der Fahrzeugkarosserieaufnahme dieselbe mittels der Hubvorrichtung angehoben werden und die Kopplung zwischen Fahrzeugkarosserie oder/und Fahrzeugkarosserieaufnahme und Flurförderfahrzeug erfolgen kann. Ein weiterer Vorteil der Unterfahrbahrkeit der Fahrzeugkarosserie oder/und der Fahrzeugkarosserieaufnahme ist, dass ein Flurförderfahrzeug unter der Fahrzeugkarosserie bzw. Fahrzeugkarosserieaufnahme hindurch zu einer weiteren - gegebenenfalls dahinter befindlichen - Fahrzeugkarosserie bzw. Fahrzeugkarosserieaufnahme fahren kann (gewissermaßen tunneln) kann. Dies kann insbesondere in Verbindung mit der omnidirektionalen Verfahrbarkeit des Flurförderfahrzeugs die Länge einer Förderstrecke bedeutend verkürzen oder/und die Zeit für die Entnahme einer bestimmten Fahrzeugkarosserie aus dem Flächenspeicher entscheidend verkürzen. "Unterfahrbar" bezieht sich dabei die von der Fahrzeugkarosserie auf die Bewegungsebene des Flurförderfahrzeugs projizierte Fläche. Eine Unterfahrbarkeit von 100% bedeutet, dass sich die gesamte Flurförderfahrzeug-Kontur unterhalb der Fahrzeugkarosserie befindet. Bei 90% - 50 % befindet sich die hälftige Kontur unterhalb der Fahrzeuggeometrie.

Bei einer vorteilhaften Ausgestaltung der Erfindung ist vorgesehen, dass die Fahrzeugkarosserie oder/und die Fahrzeugkarosserieaufnahme aus einer ersten Förderrichtung und einer zweiten Förderrichtung unterfahrbar ist. Die erste Förderrichtung schließt dabei mit der zweiten Förderrichtung einen Winkel von mindestens 60°, bevorzugt einen Winkel von 90° ein. Die Unterfahrbarkeit der Fahrzeugkarosserie bzw. der Fahrzeugkarosserieaufnahme aus zwei beispielsweise senkrecht aufeinander stehenden Förderrichtungen unterschiedlichen - vorzugsweise senkrecht zueinander stehenden - Förderrichtungen erhöht die Flexibilität in der Belegung der Gesamtlagerfläche und der Wahl einer geeigneten Entnahme- bzw. Belegungsberechnung eines geeigneten Entnahme- bzw. Belegungspfades.

Bei einer Ausgestaltung der Erfindung kann vorgesehen sein, dass die Fahrzeugkarosserieaufnahme mindestens zwei Stützbereiche aufweist. Die zwei Stützbereiche können beispielsweise als Punkt- und Linienauflager ausgebildet sein. Bei einer praxisnahen Ausgestaltung können die zwei Stützbereiche jeweils zwei Stützelemente aufweisen, sodass sich insgesamt vier Stützelemente beispielsweise in Form von Streben ergeben.

Insbesondere können in diesem Zusammenhang die Stützbereiche so angeordnet und ausgelegt sein, dass das Flurförderfahrzeug zwischen zwei Stützbereichen zu einer Haltepositionen entlang einer ersten Förderrichtung fahren und die Haltepositionen in einer zweiten Förderrichtung verlassen kann. Dabei kann sich die Halteposition insbesondere unterhalb einer Fahrzeugkarosserieaufnahme bzw. insbesondere zwischen den Stützbereichen befinden. In einer konkreten Ausgestaltung kann somit das Flurförderfahrzeug beispielsweise entlang der Längsausdehnung einer Fahrzeugkarosserie unter die Fahrzeugkarosserieaufnahme fahren, mit der Fahrzeugkarosserieaufnahme koppeln und in einer Förderrichtung quer zur Längsausrichtung zur Längsachse der Fahrzeugkarosserie mit der gekoppelten Fahrzeugkarosserieaufnahme weiterfahren.

Bei einer beispielhaften Ausführungsform eines Flächenspeichers kann vorgesehen sein, dass die Fahrzeugkarosserieaufnahmen ortsfest auf der Lagerfläche montiert sind. Dies minimiert Instabilitäten bei Belegung- und Entnahmevorgängen einer Fahrzeugkarosserie von der Fahrzeugkarosserieaufnahme.

Alternativ kann vorgesehen sein, dass die Fahrzeugkarosserieaufnahmen von dem Flurförderfahrzeug innerhalb der Lagerfläche bewegbar sind. Dies ermöglicht eine Veränderung der von den Fahrzeugkarosserieaufnahmen belegten Lagerfläche und somit beispielsweise eine Nachverdichtung der belegten Lagerfläche mit Speicherplätzen oder/und eine Umordnung zur Anpassung an beispielsweise die Größe der auf den Speicherplätzen aufzunehmenden Fahrzeugkarosserien.

Es ist auch eine Kombination von ortsfesten und bewegbaren Fahrzeugkarosserieaufnahmen möglich.

Bei einer bevorzugten Ausführungsfom kann vorgesehen sein, dass die Lagerfläche mittels des Flurförderfahrzeugs örtlich verlagerbar oder/und teilbar ist. Es kann also beispielsweise mitten im Betrieb ohne Unterbrechung die Lagerfläche vergrößert, verkleinert, verlagert oder geteilt werden, ohne dass konstruktive Eingriffe vonnöten wären.

Eine Weiterbildung der Erfindung sieht vor, dass der von einem Speicherplatz belegte Lagerflächenanteil von der Größe der entsprechenden Fahrzeugkarosserie und einem zusätzlichen Funktionszuschlagsanteil bestimmt ist. Der Funktionszuschlagsanteil kann bei einer herkömmlichen Fahrzeugkarosserie beispielsweise mindestens 10 cm betragen. Soll für eine Begehung der Lagerfläche durch eine Person ausreichend Platz vorgesehen sein, kann ein Funktionszuschlagsanteil von beispielsweise 50-60 cm vorgesehen sein. Für eventuell notwendige Fluchtwege ist beispielsweise ein Funktionszuschlagsanteil von mindestens 100 cm vorzusehen. Soll hingegen ein Fahrweg gebildet werden, ist ein Abstand zur nächsten Fahrzeugkarosserie von mindestens 250-300 cm vorzuhalten.

Bei einer Weiterentwicklung ist voargesehen, dass der Funktionszuschlagsanteil variierbar ist. Der Funktionszuschlagsanteil kann also beispielsweise je nach Bedarf für einen Teilbereich der Lagerfläche anders als in einem anderen Teil der Lagerfläche ausgelegt sein. Auch eine zeitliche Variation des Funktionszuschlaganteils kann bei Bedarf erfolgen.

Bei einer Ausführungsform ist vorgesehen, dass die Anzahl an Speicherplätzen je Lagerfläche lokal oder insgesamt variierbar ist. Es können also beispielsweise Teile der Lagerfläche oder die gesamte Lagerfläche hinsichtlich der Anzahl an Speicherplätzen je Lagerfläche verdichtet oder aufgelockert werden.

Eine vorteilhafte Ausführungsform eines Flächenspeichers sieht eine Anrodnung des Flächenspeichers zwischen den Prozessen Rohbaufertigung und Lackierung, innerhalb des Lackierprozesses oder/und zwischen den Prozessen Lackierung und Endmontage vor..

Die Aufgabe wird außerdem durch ein Verfahren zum Fördern von Fahrzeugkarosserien oder/und Fahrzeugkarosserieaufnahmen gelöst. Das erfindungsgemäße Verfahren weist die Schritte auf: Koppeln einer Fahrzeugkarosserie oder/und einer Fahrzeugkarosserieaufnahme mit einem omnidirektional verfahrbaren Flurförderfahrzeug, Fördern der Fahrzeugkarosserie oder/und der Fahrzeugkarosserieaufnahme in einer ersten Förderrichtung, und Ändern der ersten Förderrichtung in eine zweite Förderrichtung bei gleichbleibender Relativausrichtung von Fahrzeugkarosserie oder/und Fahrzeugkarosserieaufnahme und Flurförderfahrzeug.

Mittels dieser Schritte ist es möglich, eine Lagerfläche besonders flexibel und damit zeit- und ressourcenschonend zu belegen bzw. Fahrzeugkarosserien zu entnehmen oder umzulagern.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein einzelnes Speicherelement eines Flächenspeichers;
- Figuren 2, 3: alternative Ausführungsformen des Speicherelements der Figur 1;
- Figuren 4-9: verschiedene Anordnungen von Speicherplätzen auf einer Lagerfläche;
- Figur 10: eine Detailansicht eines Flächenspeichers mit festinstallierten Fahrzeugkarosserieaufnahmen;
- Figur 11: eine Detailansicht eines Flächenspeichers mit Fahrzeugkarosserieaufnahmen, die mittels eines Flurförderfahrzeugs bewegbar sind;
- Figur 12: einen Flächenspeicher mit zwölf Speicherplätzen mit festinstallierten Fahrzeugkarosserieaufnahmen in einer Funktionssituation;
- Figur 13: den Flächenspeicher der Figur 12 mit bewegbaren Fahrzeugkarosserieaufnahmen;
- Figur 14: den Flächenspeicher der Figur 13 in einer anderen Speicherplatzkonfiguration bei gleicher nutzbarer Fläche;
- Figuren 15-17: jeweils in einer Frontal- und einer Seitenansicht verschiedene Funktionsstellungen und -situationen eines Flurförderfahrzeugs für einen Flächenspeicher mit fest installierten Fahrzeugkarosserieaufnahmen;
- Figuren 18-23: in Draufsicht verschiedene Relativpositionen und -bewegungen eines Flurförderfahrzeugs und einer Fahrzeugkarosserieaufnahme bei einer fest installierten Fahrzeugkarosserieaufnahme;
- Figuren 24-25: jeweils in einer Frontal- und einer Seitenansicht verschiedene Funktionsstellungen und -situationen eines Flurförderfahrzeugs für einen Flächenspeicher mit bewegbaren Fahrzeugkarosserieaufnahmen;
- Figur 26: in einer Frontal- und einer Seitenansicht eine Fahrzeugkarosserieaufnahme mit einer eine Fahrzeugkarosserie umschließende Kabine; und
- Figuren 27-34: in perspektivischen Draufsichten verschiedene Konfigurationen und Ausführungsformen eines Flächenspeichers.
- Figuren 35, 36: in jeweils einer Frontal- und einer Seitenansicht verschiedene Funktionsstellungen und -situationen einer alternativen Ausführungsform einer Fahrzeugkarosserieaufnahme-Flurförderfahrzeug-Kombination;
- Figuren 37-40: in jeweils einer Frontal- und einer Seitenansicht verschiedene Funktionsstellungen und -situationen zweier alternativer Ausführungsformen einer Fahrzeugkarosserieaufnahme-Flurförderfahrzeug-Kombination;

### BESCHREIBUNG BEVORZUGTER AUSFÜHRUNGSBEISPIELE

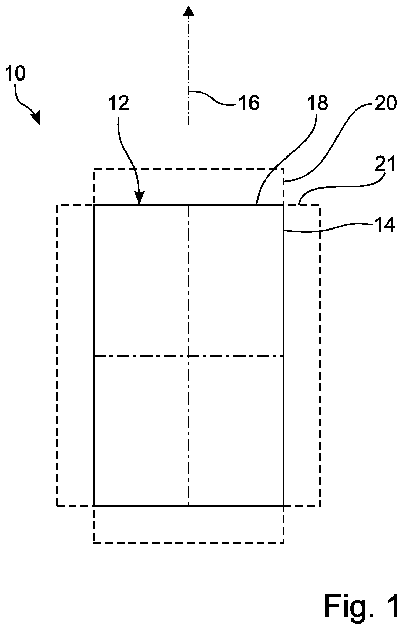

Figur 1 zeigt in einer stark schematisierten Draufsicht ein einzelnes Speicherelement 10 eines Flächenspeichers. Das Speicherelement 10 erstreckt sich in einer Ebene und bildet als Rechteck 12 die maximalen Abmessungen einer Fahrzeugkarosserie (hier nicht abgebildet) ab. In diesem in Figur 1 gezeigten Beispiel beträgt das Verhältnis aus Längsausdehnung 14 - entlang einer Längsachse 16, die bei Fahrzeugkarosserien die bevorzugte Bewegungsrichtung darstellt - und Querausdehnung 18 etwa 1:1,58. Die gesamte von dem Speicherplatz 10 beanspruchte Fläche ergibt sich aus der Fläche, welche die zu lagernde Fahrzeugkarosserie einnimmt, und einem Funktionszuschlag 20, 21, der bei der in Figur 1 gezeigten Ausführungsform als absoluter Betrag in jede Richtung zugegeben ist. Diese Funktionszuschläge 20, 21 können auf beiden Seiten der Längs- und Querausdehnung oder nur auf einer Seite vorgesehen sein und je nach Größe der Fahrzeugkarosserie und den vorgesehenen Bewegungsabläufen in Längs- und in Querausdehnung, für verschiedene Fahrzeugkarosserien, für verschiedene Lagerflächensegmente oder/und für verschiedene Flurförderfahrzeuge unterschiedlich ausfallen.

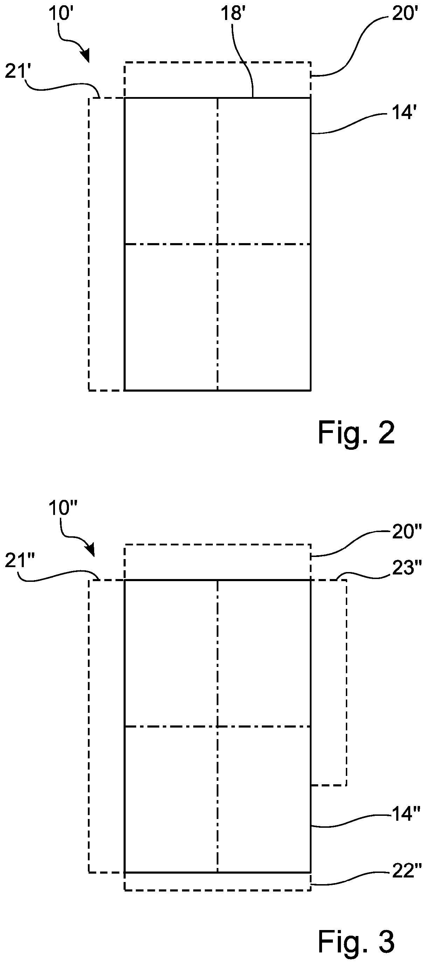

Die Figuren 2, 3 zeigen entsprechende alternative Ausführungsformen 10', 10" des Speicherelements 10 der Figur 1. Bei dem in Figur 2 sind die Funktionszuschläge 20', 21' nur jeweils auf einer Seite der Längsausdehnung 14' bzw. der Querausdehnung 18' zugegeben.

Der in der Figur 3 dargestellte Speicherplatz 10" hingegen weist in der Längsausdehnung 14" zwei unterschiedliche Funktionszuschläge 20", 22" auf. In der Querausdehnung 18" hingegen ist der Funktionszuschlag 21", 23" in seiner Erstreckung entlang der Querausdehnung 18" auf beiden Seiten gleich, erstreckt sich aber nicht über die komplette Längsausdehnung des Speicherplatzes 10".

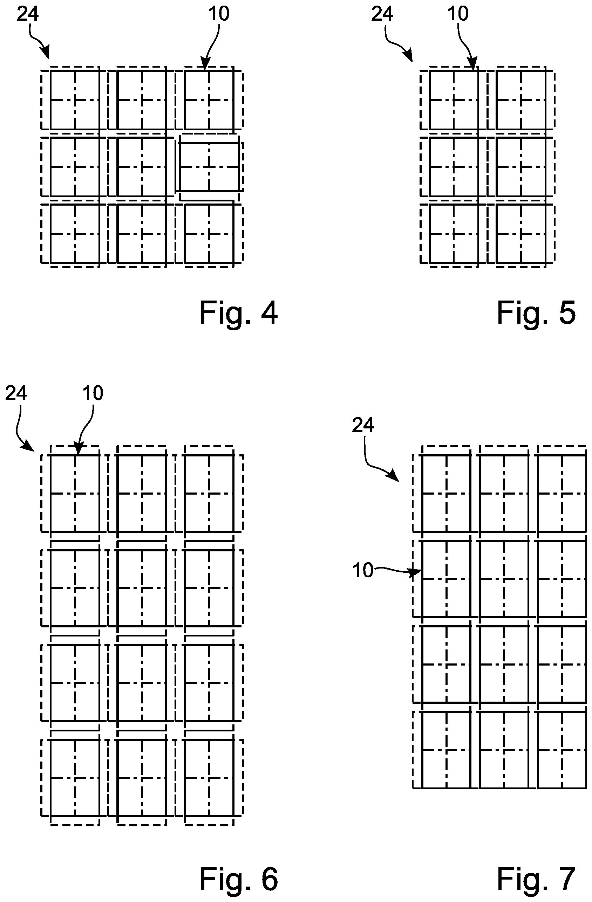

Die Figuren 4-9 zeigen in schematisierten Draufsichten verschiedene Anordnungen von Speicherplätzen 10 auf einer Lagerfläche 24. Bei der in Figur 4 gezeigten Ausführungsform einer Lagerfläche 24 weisen die einzelnen Fahrzeugkarosserien eine rechteckige, nicht quadratische, Grundform auf. Aufgrund unterschiedlicher Funktionszuschläge in Längs- und Querrichtung ergibt sich eine insgesamt quadratische Grundform des Speicherplatzes 10. Bei einer Anordnung der Speicherplätze wie in Figur 4 dargestellt ergibt sich insgesamt eine quadratische Grundform der Lagerfläche 24. Dies ermöglicht es, die einzelnen Speicherplätze 10 wie gezeigt auf mit einer um 90° gedrehten Ausrichtung einer einzelnen Fahrzeugspeicheraufnahme bzw. Fahrzeugkarosserie zu belegen.

Anders verhält es sich bei der Ausführungsform der Figur 5. Dort ergibt sich eine nicht quadratische Grundform der Lagerfläche 24.

Figur 6 stellt eine Lagerfläche 24 dar, bei der das einzelne Speicherelement 10, welches eine nicht quadratische, rechteckige Grundform aufweist, sowohl in Längsausdehnung als auch in Querausdehnung mit einem symmetrischen Funktionszuschlag versehen ist. Entsprechend ergibt sich bei der in Figur 6 gezeigten Anordnung von 3x4 Speicherplätzen eine insgesamt rechteckige Grundform der Lagerfläche 24.

Im Vergleich hierzu benötigt die Anordnung der gleichen Anzahl an Speicherplätzen 10, wie sie in Figur 7 veranschaulicht ist, aufgrund eines nur einseitig vorgesehenen Funktionszuschlags eine sichtbar geringere Grundfläche.

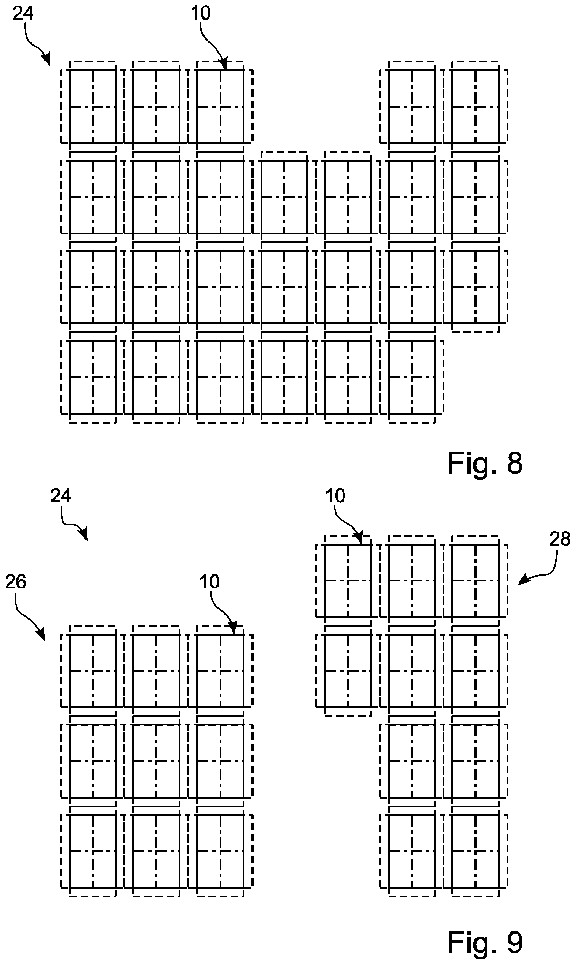

Figur 8 veranschaulicht eine nicht rechteckig geformte Lagerfläche 24 eines Flächenspeichers. Diese Anordnung demonstriert die Flexibilität des Gesamtsystems in der Ausnützung von gegebenen Flächengrundformen für die Ausbildung eines effizienten Flächenspeichers.

Figur 9 stellt eine in zwei separierte Lagerflächensegmente 26 und 28 aufgeteilte Lagerfläche 24 dar. Die erste Lagerfläche 26 kann beispielsweise auf einer ersten Ebene liegen, während die zweite Lagerfläche 28 beispielsweise auf einer anderen zweiten Ebene liegen kann, die beispielsweise durch eine von einem Flurförderfahrzeug bewältigbare Schrägfahrt erreicht werden kann. Alternativ könne auch beispielsweise zwischen den beiden Segmenten 26, 28 eine zu kreuzende Förderstrecke oder andere bauliche Gegebenheiten liegen.

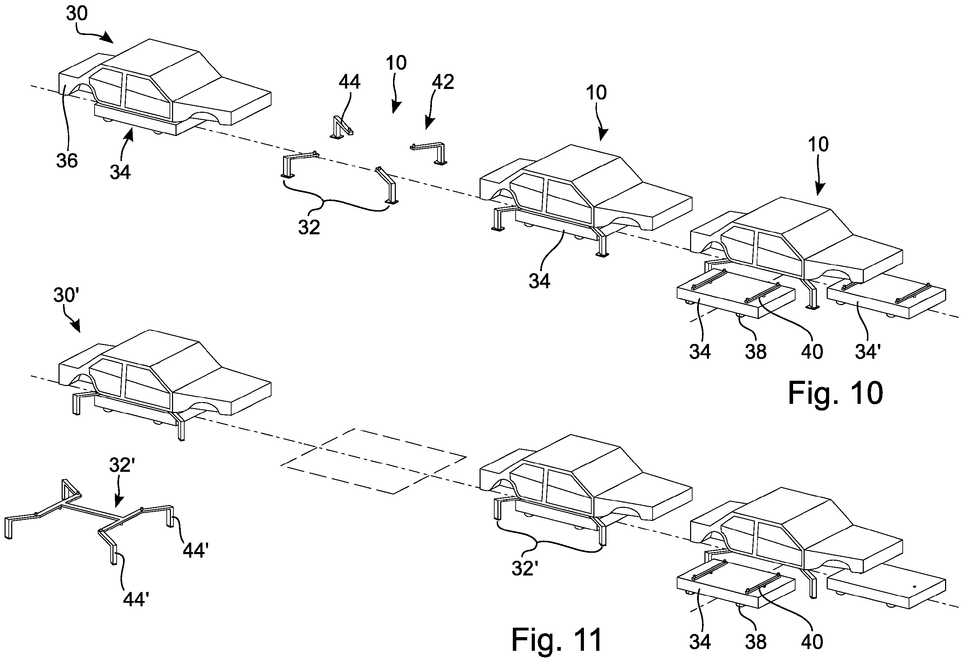

Figur 10 zeigt in einer schematischen perspektivischen Draufsicht wesentliche Teile eines Flächenspeichers 30 mit festinstallierten Fahrzeugkarosserieaufnahmen 32. Es sind in einer Reihe drei Speicherplätze 10 dargestellt. Dies kann bereits einen gesamten Flächenspeicher 30 bilden, in der Realität weisen derartige Flächenspeicher 30 eine wesentlich größere Anzahl an Speicherplätzen 10 (typischerweise einige Dutzend bis einige Hundert Speicherplätze) auf.

In der in Figur 10 gezeigten Ausführungsform eines Flächenspeichers weist jeder einzelne Speicherplatz 10 eine fest installierte und nicht ohne Eingriff verrückbare Fahrzeugkarosserieaufnahme 32 auf. Die Fahrzeugkarosserieaufnahme 32 arbeitet mit einem Flurförderfahrzeug 34 zusammen, welches in der vorliegenden Ausführungsform dazu ausgelegt ist, eine Fahrzeugkarosserie 36 zu befördern.

Das Flurförderfahrzeug 34 ist so dimensioniert, dass es sich während eines Fördervorgangs unterhalb der Fahrzeugkarosserie 36 und innerhalb der äußeren Abmessungen der Fahrzeugkarosserie 36 befindet. Das Flurförderfahrzeug 34 ist zweispurig aufgebaut und weist in der in Figur 10 gezeigten Ausführungsform insgesamt vier Räder 38, von denen zumindest zwei diagonal gegenüberliegende Räder angetrieben sind und insgesamt einen omnidirektionalen Vortrieb ermöglichen. Wie bereits erläutert wird vorliegend unter omnidirektional eine Bewegungsmöglichkeit des Flurförderfahrzeugs 34 derart verstanden, dass das Flurförderfahrzeug 34 eine beliebige Bewegungsrichtung einschlagen kann, ohne seinen Aufbau drehen zu müssen. Dies ist in der in Figur 10 ganz rechts gezeigten Situation veranschaulicht. Die beiden dargestellten Flurförderfahrzeuge 34, 34' könnten auch zwei Bewegungssituationen ein und desselben Flurförderfahrzeugs sein. Beide Flurförderfahrzeuge 34, 34' sind mit ihrer jeweiligen Längsachse parallel mit der Längsachse der Fahrzeugkarosserie 36 ausgerichtet. Während das Flurförderfahrzeug 34 in einer Bewegungsrichtung senkrecht zu der Längsachse der Fahrzeugkarosserie 36 unter die Fahrzeugkarosserieaufnahme 32 fährt, bewegt sich das Flurförderfahrzeug 34' parallel zu der Längsachse der Fahrzeugkarosserie 36. In beiden Fällen bleibt die Ausrichtung des Aufbaus des Flurförderfahrzeugs 34, 34' aufgrund der omnidirektionalen Förderbarkeit des Flurförderfahrzeugs 34, nämlich parallel zu der Längsausrichtung der Fahrzeugkarosserie 36, erhalten.

Das Flurförderfahrzeug 34 weist eine Hubvorrichtung 40 auf. Die Hubvorrichtung 40 ist so ausgelegt, dass ein Anheben der Fahrzeugkarosserie 36 soweit möglich ist, dass die Fahrzeugkarosserie 36 auf einer Fahrzeugkarosserieaufnahme 32 abgelegt und wieder aufgenommen werden kann.

Die Fahrzeugkarosserieaufnahme 32 weist in der in der Figur 10 dargestellten Ausführungsform vier Stützbereiche 42 in Form vierer Stützelemente 44 auf. Die einzelnen Stützelemente 44 sind so zueinander angeordnet, dass das Flurförderfahrzeug 34 zwischen den einzelnen Stützstreben der Stützelemente hindurchfahren kann und so unter die Fahrzeugkarosserie oder unter der Fahrzugkarosserie 36 hindurch zu einer anderen Fahrzeugkarosserie gelangen kann. Die Stützelemente 44 sind bei dieser Ausführungsform fest mit dem Untergrund verankert und so ausgelegt, dass sie insgesamt die Last einer Fahrzeugkarosserie 36 tragen können.

Figur 11 zeigt in einer weiteren Detailansicht einen Flächenspeicher 30' mit Fahrzeugkarosserieaufnahmen 32', die mittels der Flurförderfahrzeuge 34 bewegbar sind. Dabei ist der generelle Aufbau des Flächenspeichers weitgehend gleich, sodass der Gesamtaufbau nicht nochmals zur Vermeidung von Wiederholungen erläutert wird. Es wird lediglich auf die maßgeblichen Unterschiede eingegangen.

Die Fahrzeugkarosserieaufnahmen 32' sind im Unterschied zu der Ausführungsform der Figur 10 bei der der Figur 11 beweglich ausgebildet. Dies bedeutet, dass die Fahrzeugkarosserie 36 beispielsweise mit der Fahrzeugkarosserieaufnahme 32' zusammen transportiert werden kann. Alternativ oder zusätzlich kann auch vorgesehen sein, dass die Fahrzeugkarosserieaufnahme 32' ohne gekoppelte - hier: aufgelegte - Fahrzeugkarosserie 36 befördert werden kann, beispielsweise zur Umgestaltung der Lagerfläche 24 hinsichtlich der räumlichen Anordnung der Speicherplätze.

Die Fahrzeugkarosserieaufnahmen 32' sind ansonsten vergleichbar aufgebaut - sie weisen vier Stützelemente 44' auf, zwischen denen das Flurförderfahrzeug 34 hindurch fahren kann.

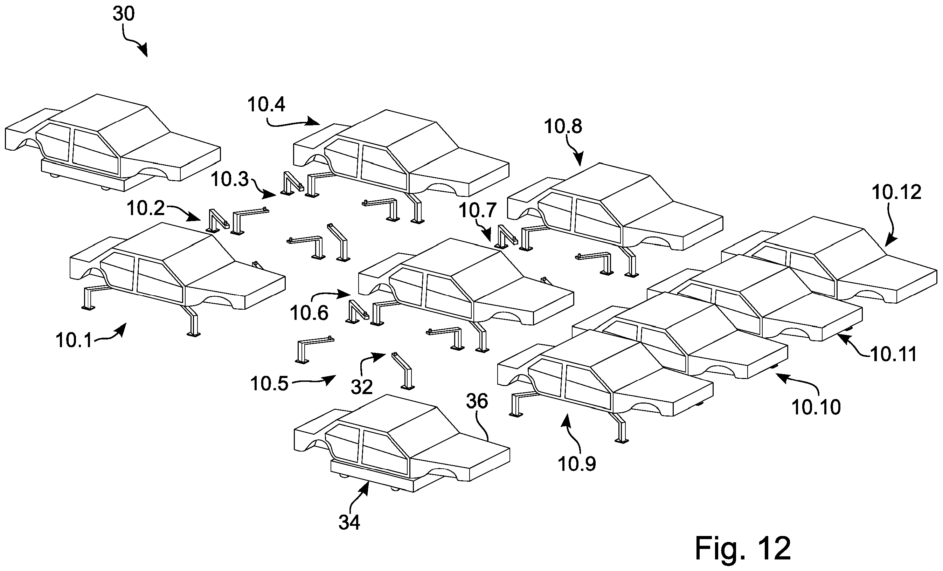

Figur 12 zeigt in einer beispielhaften Ausführungsform einen Flächenspeicher 30 mit zwölf Speicherplätzen 10 mit festinstallierten Fahrzeugkarosserieaufnahmen 32 in einer Funktionssituation. Die Größe des hier gezeigten Flächenspeichers 30 dient lediglich Veranschaulichungszwecken und kann je nach Bedarf beliebig nach oben (oder auch nach unten) skaliert werden.

Die Funktionssituation stellt sich wie folgt dar: Von den zwölf zur Verfügung stehenden Speicherplätzen 10.1 bis 10.12 sind alle mit einer fest installierten Fahrzeugkarosserieaufnahme 32 versehen und es sind die Speicherplätze 10.1, 10.4, 10.6, 10.8 und 10.9-10.12 mit einer Fahrzeugkarosserie 36 belegt. Es wird mittels eines Flurförderfahrzeugs 34 eine weitere Fahrzeugkarosserie 36 zur Belegung des Speicherplatzes 10.3 herangefördert. Gleichzeitig wurde dem Speicherplatz 10.5 mittels eines weiteren Flurförderfahrzeugs 34 eine Fahrzeugkarosserie 36 entnommen.

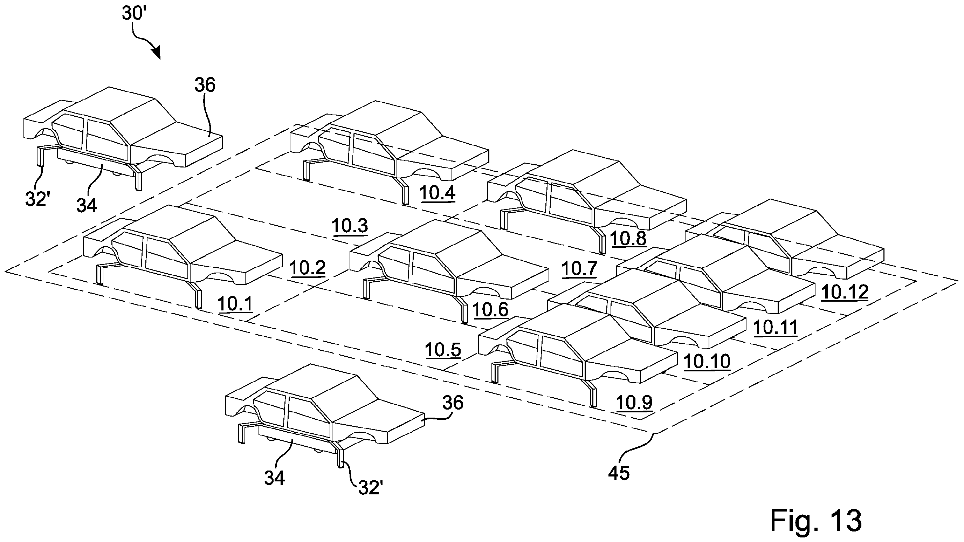

Figur 13 veranschaulicht die gleiche Funktionssituation für einen Flächenspeicher 30' mit bewegbaren Fahrzeugkarosserieaufnahmen 32' anstatt der fest installierten Fahrzeugkarosserieaufnahmen 32 der Ausführungsform der Figur 12. Die zur Speicherplatzkonfiguration zur Verfügung stehende Fläche 45 ist mit einer gestrichelten Umrandung gekennzeichnet.

In der Darstellung der Figur 13 ist bereits der große Vorteil von nicht fest installierten, sondern beweglich ausgeführten Fahrzeugkarosserieaufnahmen 32' ersichtlich. Es können auf einfache Weise verschiedene Flächenbelegungsarten, insbesondere verschiedene Flächenbelegungsdichten, realisiert werden, ohne dass baulich Veränderungen oder Eingriffe erforderlich wären.

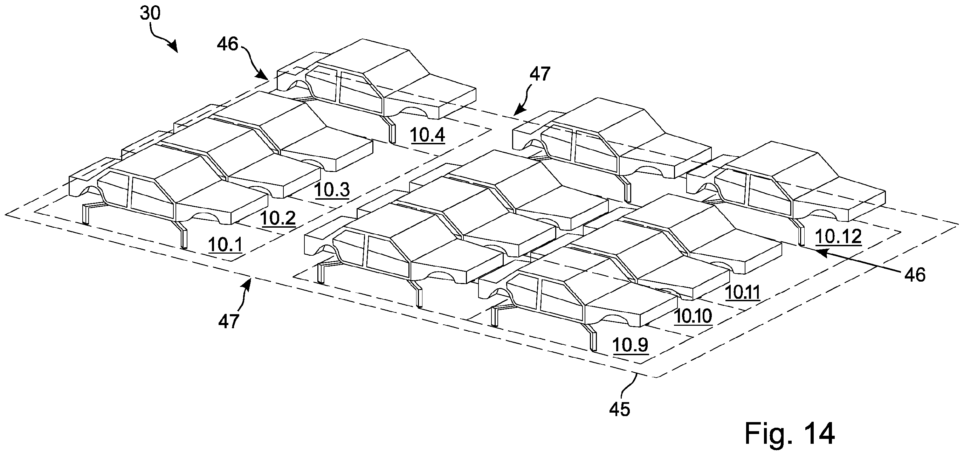

Figur 14 demonstriert dieses Prinzip anhand des Flächenspeichers der Figur 13, der in der Figur 14 in einer anderen Speicherplatzkonfiguration bei gleicher nutzbarer Fläche dargestellt ist. In Unterschied zu der Belegung der Figur 13 ist bei der Belegung der Figur 14 zwischen den Belegungsflächen 10.3 und 10.4, 10.7 und 10.8 (nicht explizit dargestellt) sowie 10.11 und 10.12 eine Gasse 46 und zwischen den Belegungsflächen 10.1-10.4 einerseits und 10.5-10.8 andererseits eine Gasse 47 entstanden, indem die Fahrzeugkarosserieaufnahmen 32' insbesondere auf den Belegungsflächen 10.1-10.3, 10.5-10.7 und 10.9-10.11 seitlich näher zusammengerückt und zwischen den Belegungsflächen 10.1-10.4 einerseits und 10.5-10.8 andererseits auseinandergerückt worden sind. Dies kann beispielsweise bei einer Farbvorsortierung für die Decklacklackierung sinnvoll sein. Es können je nach Anfall der verschiedenen Decklacke im Produktionsablauf können die bereits vorproduzierten Basislacke nach hell, mittel und dunkel innerhalb des Flächenspeichers 30 der Figur 14 sortiert eingelagert werden. Mit den gebildeten Gasse 46, 47 können beispielsweise die in den links und rechts der jeweiligen Gasse eingelagerten Fahrzeugkarosserien je nach Bedarf individuell entnommen werden.

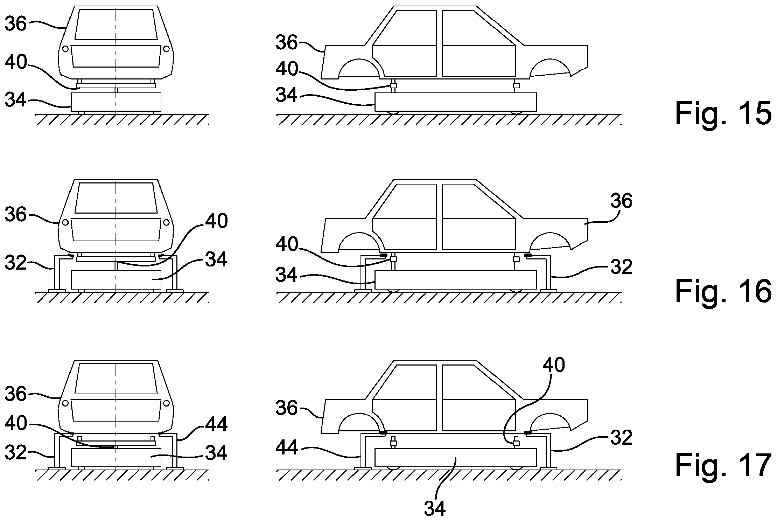

Die Figuren 15-17 zeigen jeweils in einer Frontal- und einer Seitenansicht verschiedene Funktionsstellungen und -situationen eines Flurförderfahrzeugs 34 für einen Flächenspeicher 30 mit fest installierten Fahrzeugkarosserieaufnahmen 32.

Figur 15 zeigt eine Fahrzeugkarosserie 36, die auf einem Flurförderfahrzeug 34 aufliegend mit diesem gekoppelt ist. Die Fahrzeugkarosserie 34 kann beispielsweise direkt mit dem Flurförderfahrzeug 34 oder mittels eines Skids (nicht abgebildet) gekoppelt sein. Das Flurförderfahrzeug 34 befindet sich in seiner Transportstellung, die es bei dem Zurücklegen größerer Strecken einnimmt. In dieser Transportstellung kann die Hubvorrichtung 40 beispielsweise sich in einer unteren Stellung befinden, um mögliche Wank- oder Neigebewegungen der Fahrzeugkarosserie 36 während der Fahrt zu verringern.

Figur 16 zeigt die Funktionssituation einer Einfahrt in oder Ausfahrt aus einem Speicherplatz 10. In einer solchen Situation befindet sich die Hubvorrichtung 40 in einer oberen Stellung, um ein Auflegen der Fahrzeugkarosserie 36 auf die Fahrzeugkarosserieaufnahme 32 zu ermöglichen.

Figur 17 stellt die Situation kurz nach dem Ablegen der Fahrzeugkarosserie 32 dar. Die Hubvorrichtung 40 befindet sich wiederum in ihrer unteren Stellung. Durch das Herablassen der Hubvorrichtung ist die Fahrzeugkarosserie 36 in Kontakt mit der Fahrzeugkarosserieaufnahme 32 gelangt und stützt sich nun auf dieser ab. Das Flurförderfahrzeug 34 ist somit frei und kann den Speicherplatz 10 beispielsweise durch ein seitliches Herausfahren zwischen den Stützelementen 44 wieder verlassen.

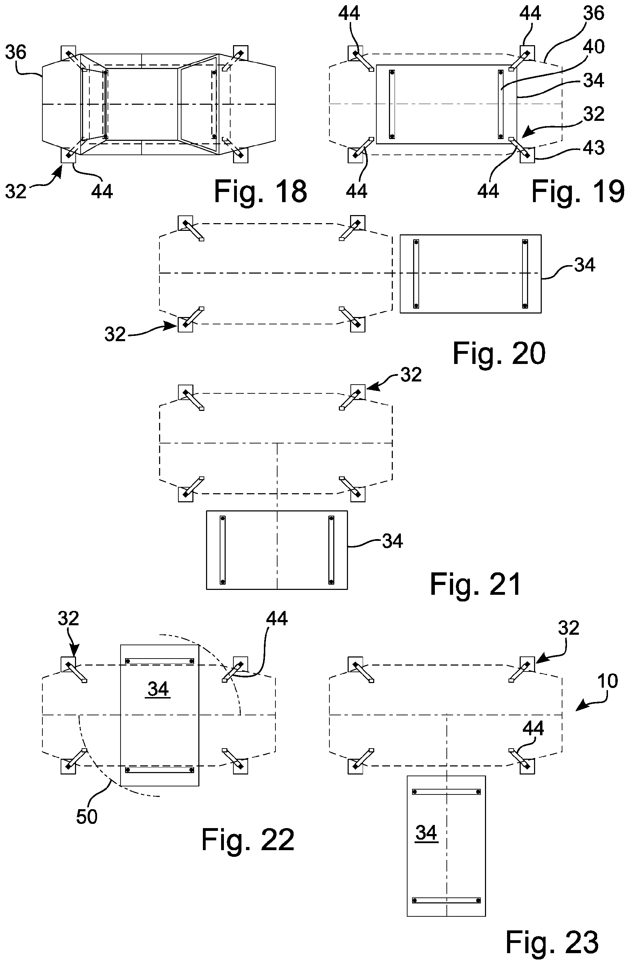

Die Figuren 18-23 zeigen in Draufsicht verschiedene Relativpositionen, -dimensionen und -bewegungen eines Flurförderfahrzeugs 34 und einer fest installierten Fahrzeugkarosserieaufnahme 32.

Figur 18 veranschaulicht in einer Draufsicht die relative Anordnung und Dimensionierung von Fahrzeugkarosserie 36 und Fahrzeugkarosserieaufnahme 32 mit Stützelementen 44. Wie zu erkennen ist, sind die Stützelemente 44 der Fahrzeugkarosserieaufnahme 32 so angeordnet und ausgelegt, dass sie der Fahrzeugkarosserie 36 an vier Punkten als Auflager dienen und tragen kann.

Figur 19 stellt die relative Dimensionierung der Fahrzeugkarosserieaufnahme 32, insbesondere der Stützelemente 44, und des Flurförderfahrzeugs 34 sowie der Hubvorrichtung 40 dar. Aus der Darstellung ergibt sich, dass die bodennahen Auflager 43 der Stützelemente 44 so angeordnet sind, dass das Flurförderfahrzeug 34 sowohl in einer Längsrichtung als auch in einer Querrichtung zwischen zwei Stützelementen 44 hindurch fahren kann, um so unter die Fahrzeugkarosserieaufnahme 32 zu gelangen bzw. diese und den Speicherplatz zu verlassen.

Diese Situationen sind in den nachfolgend beschriebenen Figuren 20 und 21 dargestellt. Während in Figur 20 das Flurförderfahrzeug 34 in Längsrichtung unter der Fahrzeugkarosserie 36 bzw. der Fahrzeugkarosserieaufnahme 32 hervorgefahren ist bzw. entlang der Längsrichtung hinfahren könnte, zeigt die Figur 21 den Fall, dass das Flurförderfahrzeug 34 in Querrichtung unter die Fahrzeugkarosserieaufnahme 32 fahren könnte bzw. unter dieser hervorgefahren ist.

Die Figur 22 stellt die Situation dar, dass das Flurförderfahrzeug 34 unterhalb der Fahrzeugkarosserieaufnahme 32 zwischen den Stützelementen 44 eine Drehung um 90° vollführen kann. Dies ist durch den gestrichelten Kreis 50 angedeutet.

Entsprechend kann das Flurförderfahrzeug 34 entlang seiner Längsrichtung quer zur Längsrichtung der Fahrzeugkarosserieaufnahme 32 und damit auch quer zur Längsrichtung der Fahrzeugkarosserie 36 ein- oder ausfahren.

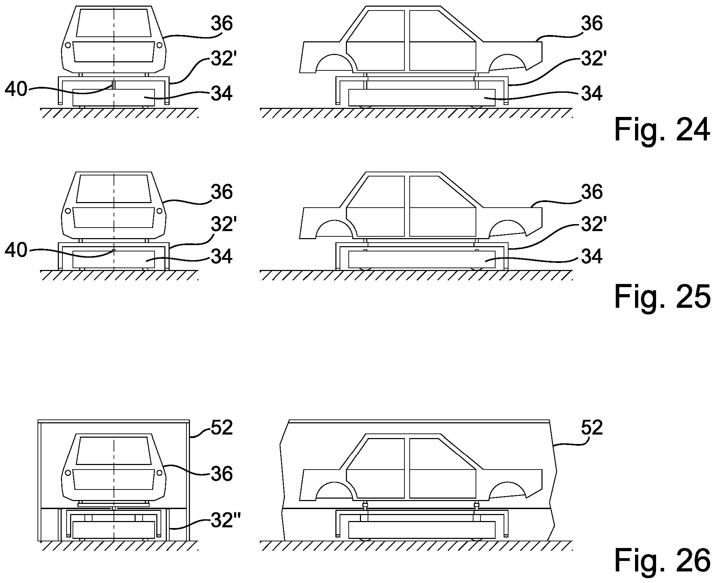

Die Figuren 24-25 zeigen jeweils in einer Frontal- und einer Seitenansicht eine Transportstellung und eine absenkte Stellung eines Flurförderfahrzeugs 34 für einen Flächenspeicher 30' mit bewegbaren Fahrzeugkarosserieaufnahmen 32'. Da bei der bewegbaren Fahrzeugkarosserieaufnahme 32' dieselbe bei einem Transport der Fahrzeugkarosserie 36 mittransportiert wird, ist es notwendig, die Hubvorrichtung 40 während einer Streckenfahrt in der angehobenen Stellung zu belassen, um so genügend Freiraum unterhalb der Stützelemente 44 zu erreichen. Diese Situation ist in Figur 24 dargestellt.

Figur 25 zeigt die andere mögliche Stellung, bei der das Flurförderfahrzeug 34 seine Hubvorrichtung 40 abgesenkt hat. In dieser Stellung kontaktiert die Fahrzeugkarosserieaufnahme 32' den Untergrund. Entsprechend kann das Flurförderfahrzeug 34 den Bereich unterhalb der Fahrzeugkarosserieaufnahme 32' verlassen oder darunter einfahren.

Figur 26 zeigt in einer Frontal- und einer Seitenansicht eine alternative Fahrzeugkarosserieaufnahme 32" mit einer eine Fahrzeugkarosserie 36 umschließenden Kabine 52.

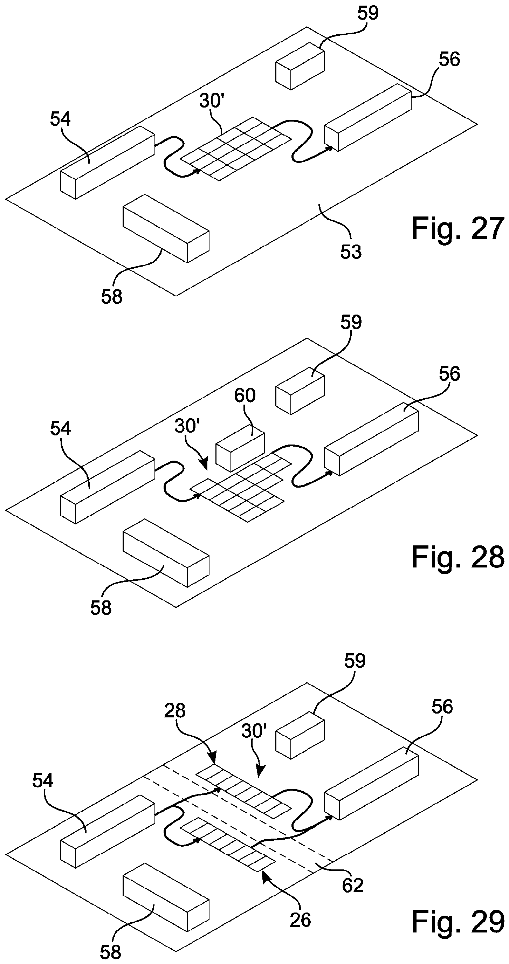

Figuren 27-34 zeigen in perspektivischen Draufsichten verschiedene Konfigurationen und Ausführungsformen eines Flächenspeichers 30'. Der in den Figuren 27-34 gezeigte Flächenspeicher erstreckt sich in einer Fahrebene 53 und besitzt bewegbare Fahrzeugkarosserieaufnahmen 32'. Entsprechend kann die Anzahl und die räumliche Anordnung der einzelnen Speicherplätze 10 bzw. Speicherelemente variiert werden.

Figur 27 stellt den Flächenspeicher 30' eingebunden zwischen einem vorgelagerten Prozess 54 und einem nachgelagerten Prozess 56 dar. Die von dem vorgelagerten Prozess stammenden Fahrzeugkarosserien 36 können in den Flächenspeicher 30' eingelagert werden. Der Flächenspeicher 30' kann dabei innerhalb der Flächenspeicherebene 53 zwischen vorhandenen Gebäudeeinbauten 58, 59 eingepasst werden.

Figur 28 stellt die Situation dar, bei der ein weiteres Gebäudeteil 60 hinzugekommen ist. Entsprechend ist ohne großen Aufwand ein Teil der Speicherplätze 10 umgelagert worden, ohne die Kapazität des Flächenspeichers 30' zu beeinträchtigen.

In Figur 29 wurde ausgehend von der Situation in Figur 27 eine temporäre Freifläche 62 geschaffen. Auch dies kann ohne großen Aufwand mit den bestehenden Flurförderfahrzeugen 34 realisiert werden, im vorliegenden Beispiel durch Schaffung zweier getrennter Lagerflächensegmente 26, 28.

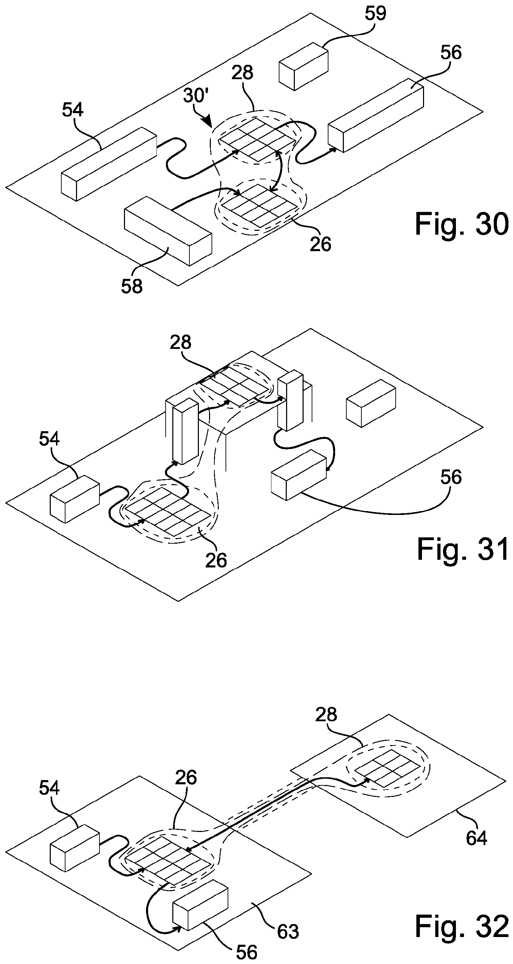

Während die Figur 29 dargestellte Freifläche 62 nur temporärer Natur ist, sieht der Flächenspeicher 30' der Figur 30 ein feste Trennung des Speicherbereichs in zwei Segmente 26, 28 vor. Auf diese Weise können beispielsweise aus zwei vorgelagerten Prozessen 54, 58 jeweils Fahrzeugkarosserien 36 in getrennte Speichersegmente 26, 28, die sich aber in einem Gebäude befinden können, eingelagert werden und bei Bedarf dem nachgelagerten Prozess 56 zugeführt werden.

Figur 31 sieht eines der beiden Speichersegmente 28 auf einer räumlich höher gelegenen zweiten Ebene vor. Figur 32 verortet das zweite Segment 28 ebenfalls auf einer zweiten Ebene, aber in einem anderen, von dem ersten Gebäude 63 getrennten zweiten Gebäude 64.

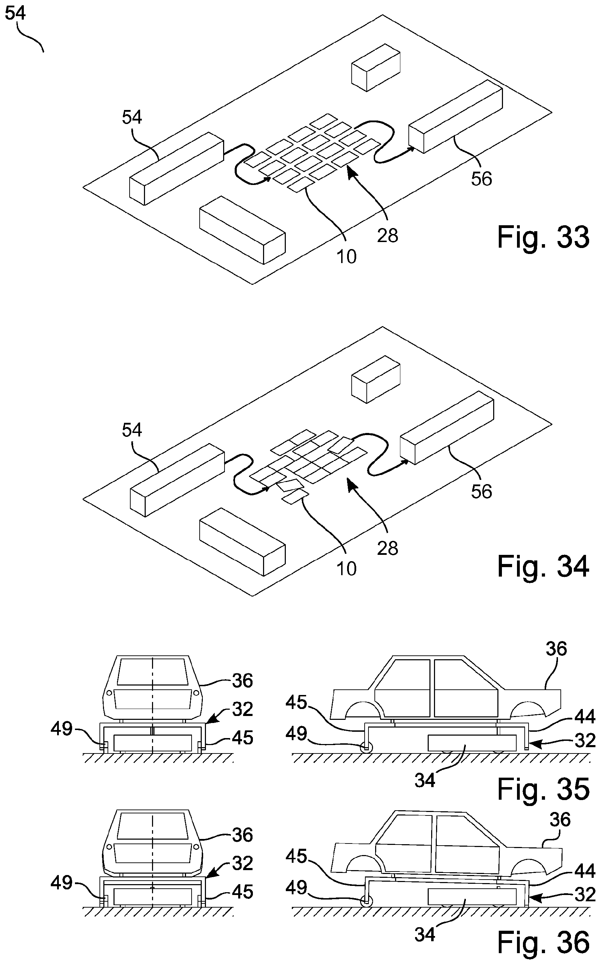

Andere Möglichkeiten zur Anwendung der dynamischen Speicherallokation wären das Anordnen der einzelnen Speicherplätze 10 in einer aufgelockerten Form, dargestellt in Figur 33, oder in einer chaotischen Form, gezeigt in Figur 34.

Die Figuren 35, 36 zeigen in jeweils einer Frontal- und einer Seitenansicht verschiedene Funktionsstellungen und -situationen einer alternativen Ausführungsform einer Fahrzeugkarosserieaufnahme-Flurförderfahrzeug-Kombination. Die in den Figuren 35, 36 dargestellte Ausführungsform sieht anstelle von vier im Wesentlichen gleich ausgestalteten Stützelementen 44 einer Fahrzeugkarosserieaufnahme 32 nur zwei solcher Stützelemente 44 vor. Die beiden anderen Stützelemente 45 sind an ihrer bodennahen Seite mit Freilaufrollen 49 versehen. Entsprechend kann das Flurförderfahrzeug 34 so ausgestaltet sein, dass es die Fahrzeugkarosserieaufnahme 32 nur an der den Rollen 49 gegenüberliegenden Seite anhebt und gewissermaßen abschleppt. Diese Ausgestaltung erlaubt es, das als Zugmaschine ausgebildete Flurförderfahrzeug für geringere Hubkräfte auszulegen. Figur 35 zeigt eine Fahrsituation, Figur 36 eine Parksituation.

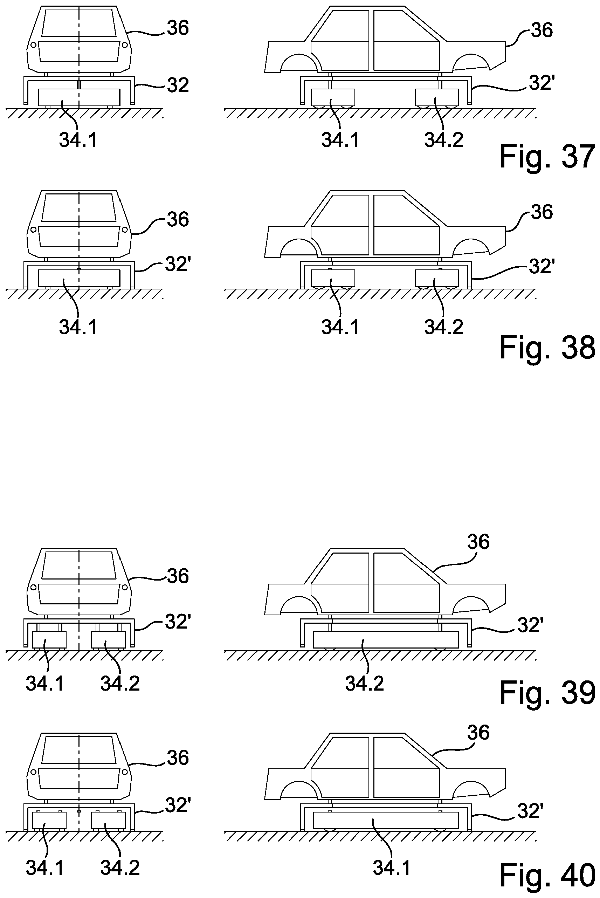

Die Figuren 37-40 zeigen in jeweils einer Frontal- und einer Seitenansicht verschiedene Funktionsstellungen und -situationen zweier alternativer Ausführungsformen einer Fahrzeugkarosserieaufnahme-Flurförderfahrzeug-Kombination, bei der das Flurförderfahrzeug 34 zwei separate Fahrkörper 34.1, 34.2 aufweist. Die beiden Fahrkörper sind mechanisch voneinander getrennt, operieren aber vermittels Datenübertragung miteinander. Es sind entsprechende Sensoren und Datenübertragungsmittel vorgesehen, die eine gemeinsam koordinierte Tätigkeit beider Fahrkörper 34.1, 34.2 ermöglichen.

Figur 37 stellt die Situation dar, in der die Fahrkörper 34.1, 34.1 - die generell für omnidirektionales Fahren ausgelegt sind - mit ihren Längsachsen quer zur Fahrtrichtung angeordnet sind und die Fahrzeugkarosserieaufnahme 32' angehoben ist. In Figur 38 ist die Fahrzeugkarosserieaufnahme 32' abgesenkt.

Die Figuren 39 und 40 sehen eine Ausrichtung der Fahrkörper entlang der Längsachse der Fahrzeugkarosserieaufnahme 32' und damit auch entlang der Fahrzeugkarosserie 36 selbst vor. Die Figur 39 zeigt eine Fahrsituation, Figur 40 eine Situation dar, in der die Fahrzeugkarosserieaufnahme 32' abgestellt ist.

Generell gilt Folgendes bezüglich der Erfindung:
Als einfacher Flächenspeicher kann ein zweidimensionaler Bereich mit flächiger Ausdehnungen in X- und Y-Richtung dienen, wobei beispielhaft die X-Richtung der Werkstücklängsachse Xw und die Y-Richtung der Werkstückquerachse Yw entsprechen soll.

Die Fläche des Speicherplatzes ergibt sich aus den Dimensionen des Werkstückes in X-Richtung Lx (inklusive einem ein- oder beidseitigem Funktionszuschlag Fx) multipliziert mit den Dimensionen des Werkstückes in Y-Richtung By (inklusive einem ein- oder beidseitigem Funktionszuschlag Fy).

Die gesamte, aktuelle Fläche des Flächenspeichers ergibt sich aus der Summe der Speicherplätze mit ihren jeweiligen, individuellen Flächen. Die Fläche und/oder die Summe der Speicherplätze ist in Grenzen variabel, da Werkstückgrößen und Funktionszuschläge veränderbar sind.

Die Fahrzeugkarosserie oder das Fahrerhaus können auf einem Werkstückträger befestigt sein, wie beispielsweise einem Skid oder geeigneten Traversen. Der Werkstückträger kann von dem Flurförderfahrzeug aufgenommen, transportiert und abgegeben werden. Das Werkstück kann aber auch direkt von dem Flurförderfahrzeug aufgenommen werden.

Der Werkstückträger mit Fahrzeugkarosserie kann direkt auf den Boden oder auf separaten Aufnahmen gestellt werden. Es ist auch möglich, die Fahrzeugkarosserie direkt auf die Fahrzeugaufnahme zu stellen.

Das Flurförderfahrzeug kann einen abgestellten Werkstückträger beladen oder unbeladen oder eine Fahrzeugkarosserie omnidirektional unterfahren und zum Transport anheben.

Eine mobile Fahrzeugkarosserieaufnahme kann vom Flurförderfahrzeug mit oder ohne Fahrzeugkarosserie transportiert werden.

Eine ortsfeste Fahrzeugkarosserieaufnahme kann so bestigt sein, dass sie von dem Flurförderfahrzeug nicht transportiert werden kann. Alternativ kann die ortsfeste Fahrzeugkarosserieaufnahme auch nur gegen ein unerwünschtes horizontales Bewegen beispielsweise mittels Bodenhülsen gesichert sein, aber bei einem Anheben mittels des Flurförderfahrzeugs bewegbar sein.

Eine ortsfeste Fahrzeugkarosserieaufnahme kann auf der Aufstellfläche bewegbar aufgestellt sein. So können durch manuellen Eingriff die Anzahl und Größe der Speicherplätze innerhalb des Flächenspeichers variabel gestaltet werden. Beispielsweise kann in einem gerasterten Bodenlochsystem eine Fixierung in vertikaler Richtung erfolgen.

Eine ortsfeste Fahrzeugkarosserieaufnahme kann auf der Aufstellfläche zum Schutz gegen horizontale Bewegung befestigt sein.

Da der Flächenspeicher keine stationären Förderelemente als Schnittstelle zu anderen Prozessen aufweist, sind separate Flurförderfahrzeuge zur Einlagerung, Umlagerung und/oder Auslagerung erforderlich. Zur Einlagerung einer Fahrzeugkarosserie ist mindestens ein freier Speicherplatz erforderlich. Dieser kann an einer der äußeren Seiten des Flächenspeichers liegen. Dann ist eine direkte Einlagerung durch das Flurförderfahrzeug möglich, da dieses omnidirektional fahren kann. Liegt der mindestens eine freie Platz nicht an einer direkt zugänglichen Außenseite und kann nicht direkt angefahren werden, so entsteht dieser freie Platz als Lücke an einer von außen zugänglichen Stelle durch Umlagerung von im Flächenspeicher vorhandenen Fahrzeugkarosserien auf andere Speicherplätze.

Die Umlagerungen können durch das anliefernde Flurförderfahrzeug oder ein anderes Flurförderfahrzeug erfolgen. Erfolgt die Umlagerung durch das anliefernde Flurförderfahrzeug, so kann die Fahrzeugkarosserie ggf. vorab zwischengepuffert werden.

Vorteilhaft ist es jedoch, wenn ein anderes Flurförderfahrzeug diese Umlagerungen machen kann. Bei diesem anderen Flurförderfahrzeug kann es sich beispielsweise um das Flurförderfahrzeug handeln, welches vorher angeliefert hat. Es kann aber auch ein Flurförderfahrzeuge aus der Gesamtanzahl an Flurförderfahrzeugen für diesen Umlagerungsvorgang beauftragt werden.

Es können auch mehrere Flurförderfahrzeuge Umlagerungen vornehmen. Dabei kann eine Fahrzeugkarosserie bei einem Umlagerungsvorgang direkt auf ihren Zielplatz umgelagert werden oder innerhalb des Flächenspeichers eine Zwischenlagerung erfahren und dabei beispielsweise von zwei unterschiedlichen Flurförderfahrzeugen auf den endgültigen Speicherplatz gebracht werden.

Es kann günstig sein, wenn ein Flurförderfahrzeug konstruktiv speziell für die Umlagerungen vorgesehen wird. Beispielsweise mit anderen Fahrparametern, Sicherheitseinrichtungen und Navigationssystemen. Auch kann die Energieversorgung für den Umlagerungsfall optimiert sein.

Bei der Erstellung der Umlagerungsaufträge kann die Flächenspeicherverwaltung anstehende Einlagerung- und/oder Auslagerungsaufträge zur Weg- und/oder Produktionsoptimierung bereits berücksichtigen. Eine vorausschauende Umlagerung ist möglich.

Es können Umlagerungen auch angestoßen werden, wenn eine Fahrzeugkarosserie ausgelagert wird. Umlagerungen können auch von vorgelagerten und/oder nachgelagerten Fertigungsprozessen angestoßen werden.

Bei einem Flächenspeicher mit bewegbaren Fahrzeugkarosserieaufnahmen können im konfigurierbaren Flächenspeicher keine ortsfesten Fahrzeugkarosserieaufnahmen für die Speicherplätze montiert sein. Die Speicherplätze werden von der Steuerung virtuell festgelegt. Die Größe der einzelnen Speicherplätze ergibt sich aus den Daten für die Fahrzeugkarosserien und die entsprechenden Funktionszuschläge. Die Fahrzeugkarosserien werden hierbei über die jeweiligen realen Außenabmessungen definiert. Diese können innerhalb des Flächenspeichers bei unterschiedlichen Fahrzeugkarosserien unterschiedlich sein.

Unter Funktionszuschlägen sind Werte zu verstehen, die zu den realen Fahrzeugkarosseriemaßen addiert werden, um Raum für Sicherheitsabstände oder Prozessschritte zu ermöglichen. Sicherheitsabstände sind erforderlich, um eine Berührung der Fahrzeugkarosserien innerhalb des Flächenspeichers auf Grund von Toleranzen und/oder Ungenauigkeiten zu berücksichtigen. Des Weiteren sind auch Freiräume für die Begehung durch Personen (temporär oder dauerhaft) in Form von Wartungszugängen oder Fluchtwegen darunter zu verstehen. Als Raum für einen erforderlichen Prozessschritt kommt z.B. ein Zuschlag für eine Drehung zur Veränderung der Richtungsorientierung der Fahrzeugkarosserie in Betracht. Dies tritt beispielsweise bei der Auslagerung aus dem Flächenspeicher mit anschließender Übergabe in einen Umsetzbereich auf. Hier sind die Einlagerung als Bewegung "Fahrzeugkarosse vorwärts" und bei der Auslagerung als Bewegung "Fahrzeugkarosserie rückwärts" durchzuführen.

Aus den Fahrzeugkarosseriedaten und den Funktionszuschlägen erstellt die Steuerung einen gesamten Flächenbedarf für die jeweilige individuelle Fahrzeugkarosserie. Somit können sich bei gleichen Fahrzeugkarosserien und unterschiedlichen Funktionszuschlägen unterschiedliche Speicherplatzgrößen ergeben. Ebenso können sich bei unterschiedlichen Fahrzeugkarosserien und unterschiedlichen Funktionszuschlägen gleiche Speicherplatzgrößen ergeben. Die ermittelte Speicherplatzgröße wird dem Flurförderfahrzeug mit Fahrzeugkarosserie zugeordnet.

Die Sicherheitseinrichtungen der Flurförderfahrzeuge können sich ggf. auf die veränderten räumlichen Bedingungen einstellen und die Fahrparameter anpassen.

Die zugeordnete Speicherplatzgröße kann während des Aufenthalts im Flächenspeicher innerhalb vorgegebener Grenzwerte verändert werden. Zum Beispiel für Umlagerungen oder bei räumlichen Einschränkungen.

Die Flächenspeichersteuerung kann somit zu jedem Zeitpunkt eine optimierte Flächenspeichernutzung ermitteln. Diese kann abhängig beispielsweise bei vor- und/oder nachgelagerten Prozessen variabel sein. Somit kann ein "verdichteter" oder "aufgelockerter" Flächenspeicher realisiert werden.

Besonders vorteilhaft ist dieses System, wenn über einen bestimmten Zeitraum Fahrzeugkarosserien einer bestimmten Größe (beispielsweise groß) gespeichert werden müssen und zu einem anderen Zeitpunkt zumindest teilweise Fahrzeugkarosserien mit einer von den ersten Fahrzeugkarosserien verschiedenen Größe (beispielsweise klein) gespeichert werden sollen. Dann können ohne mechanische Umbauten die Speicherplätze entsprechend organisiert werden und ggf. die Gesamtkapazität erhöht werden.

Auch können beispielsweise zu geeigneten Zeitpunkten wie beispielsweise produktionsfreien Zeiten die Fahrzeugkarosserien "verdichtet" gespeichert werden. Dies geschieht durch eine neue Zuordnung von Funktionszuschlägen pro Fahrzeugkarosserie und anschließender Umlagerung der Fahrzeugkarosserien innerhalb des Flächenspeichers. Dies kann zum Beispiel vorteilhaft sein, wenn der Flächenspeicher temporär für einen bestimmten Zeitraum vom Verkehr (Personen, Fahrzeuge...) für Wartungsmaßnahmen oder Materialtransport gequert werden muss.

Das Flächenspeicherverwaltungssystem kann bei entsprechender Kenntnis der baulichen Gegebenheiten und unter Berücksichtigung der tatsächlichen Platzsituation den aktuellen Flächenspeicher zumindest teilweise aus seinem ursprünglich festgelegten Bereich verlagern. Beispielhaft könnte ein gesamter Flächenspeicher mit 50 Plätzen einer festgelegten Größe zuerst datentechnisch um 30 Plätze erweitert werden. Diese 30 zusätzlichen Plätze bilden dann ein zusätzliches Flächenspeichersegment. Der gesamte Flächenspeicher besteht dann aus zwei Flächenspeichersegmenten. Diese können räumlich getrennt sein. Zum Beispiel kann sich der ursprüngliche Flächenspeicher oben auf dem Gebäude befinden, während die Erweiterung sich in einer davon verschiedenen Ebene befindet. Es können aber auch beide Segmente auf einer Ebene realisiert werden.

Diese 30 zusätzlichen Plätze werden dann entweder durch Umlagerungen aus dem ersten Flächenspeichersegment gefüllt oder durch Einlagerungen aus dem Produktionsprozess, wobei grundsätzlich Fahrzeugkarosserien in unterschiedlichsten Bearbeitungsstufen einlagerbar sind. Die frei gewordenen 30 Stellplätze werden dann datentechnisch dem ersten Flächenspeichersegment entnommen. Somit wurde dieser verkleinert. Dieser Vorgang kann selbstverständlich mehrmals durchgeführt werden bis das erste Flächenspeichersegment die Platzanzahl Null hat. Dann ist der gesamte Flächenspeicher dynamisch verlagert worden. Selbstverständlich kann diese Verlagerung auch für alle Plätze in einem Schritt erfolgen.

Dies kann auch als Speicheroptimierung genutzt werden wenn diese Funktionalität in Zeiten mit geringem Transportaufkommen (Pausen / Schichtende) durchgeführt wird.

Ein solcher Flächenspeicher kann zur Aufnahme von Fahrzeugkarosserien dienen. Diese können unterschiedliche Bearbeitungszustände haben. Fertige oder teilmontierte Rohkarossen, lackierte Karossen in unterschiedlichen Bearbeitungsstufen (frisch lackierte oder bereits getrocknete Karossen mit unterschiedlichen Beschichtungen).

Die räumliche Anordnung des Flächenspeichers kann grundsätzlich in allen Gebäudeebenen ganz oder teilweise erfolgen, sofern diese Ebenen entsprechende Flächen zur Verfügung stellen.

Es ist auch möglich, den Flächenspeicher auf vorhandenen Gebäuden als oberstes Element auf oder als Dach zu erstellen. Wird er auf einem vorhandenen Dach realisiert, kann als schützende Umhüllung auch eine Traglufthalle genommen werden.

Sofern keine negativen Einflüsse zu befürchten sind, können Fahrzeugkarosserien auch ohne zusätzliche Abdeckung quasi unter freiem Himmel auf Gebäuden oder neben Gebäuden zumindest zeitweise realisiert werden. Dann sind die Witterungseinflüsse bei der konstruktiven Gestaltung der Flurförderfahrzeuge für diesen Bereich zu berücksichtigen.

Die Verwaltung und Steuerung des Flächenspeichers erfolgt in Abhängigkeit von den umgebenden Produktionsanlagen.

Bei der Ausführungsform "mobiler Flächenspeicher", bei der jede Fahrzeugkarosserie eine eigene Aufnahme mitführt, ist es von Vorteil, wenn das Flurförderfahrzeug mit Sensorik zur Umfelderkennung ausgerüstet ist. Auf diese Weise bewegt sich das Flurförderfahrzeug frei im Lagerabbild und navigiert hierbei selbstständig.

Dies ermöglicht es den Flurförderfahrzeugen, sich im beladenen oder unbeladenen Zustand selbstständig von den äußeren Flächenspeicherbereichen zu inneren Flächenspeicherbereichen zu bewegen. Dazu können Identifikationssysteme und/oder Erkennungssysteme wie Scanner, QR-Codeleser, RFID, ... genutzt werden.

Zu Kontrollzwecken können neben oder über dem Flächenspeicher eine oder mehrere optische Erkennungssysteme zu Unterstützung der Flurförderfahrzeuge installiert sein.

Vorteilhaft ist es, wenn diese Systeme eine Lageveränderung von im Flächenspeicherbereichen positionierten Aufnahmen erkennen, welche nicht durch die Flurförderfahrzeuge vorgenommen wurden und diese Abweichungen an die betreffenden Flurförderfahrzeuge zur Korrektur der Wegstreckenvorgaben weitergeben. Dies kann auch durch ein Hallenradar erfolgen.

Bei günstiger Ausgestaltung der mobilen Fahrzeugkarosserieaufnahme als Schnittstelle zwischen Flurförderfahrzeug und Fahrzeugkarosserie können Fahrzeugkarosserien mit verbundener mobiler Aufnahme mehrere Fertigungsschritte nacheinander durchlaufen ohne voneinander getrennt zu werden.

Beispielsweise kann die Befestigung erster Karosseriebauteile bereits in der Rohbauphase erfolgen und die Komplettierung der Fahrzeugkarosserie im Rohbau ohne Wechsel der mobilen Transportaufnahme erfolgen. Derartig gefertigte Rohbaukarosserien können dann mit der mobilen Transportaufnahme über geeignete Rohbauförderer an die flächenspeichertauglichen Flurförderfahrzeuge übergeben werden und ggf. vor dem nächsten Bearbeitungsschritt in einem Flächenspeicher oder einem Flächenspeichersegment zwischengepuffert werden.

Für den nächsten Bearbeitungsschritt können die Karosserien mit den mobilen Fahrzeugkarosserieaufnahmen an den nächsten Prozessschritt übergeben werden. Dabei kann es sich beispielsweise um eine Tauchlackierung mit anschließendem Trocknungsprozess handeln. Die so getrockneten und grundierten Fahrzeugkarosserien können ebenfalls in den Flächenspeicher zwischengelagert werden und für den nächsten Bearbeitungsprozess zur Verfügung zu stehen. Dies wäre beispielsweise eine Lackieranlage für alle erforderlichen Lackier- und Trocknungsvorgänge oder eine Endmontagelinie.

Selbstverständlich ist es möglich, die Fahrzeugkarosserie mit der zugehörigen mobilen Fahrzeugkarosserieaufnahme auch teilweise auf anderen Förderelementen zu befördern.

Ebenso ist es bei entsprechender konstruktiver Ausführung der mobilen Fahrzeugkarosserieaufnahme möglich, mit dem Flurförderfahrzeug direkt die Fahrzeugkarosserie in anderen Bearbeitungsstationen zu fördern. Zum Beispiel in kabinenartige Bearbeitungsbereiche wie Kontrollplätze, Lackierkabinen oder Trockentunnel.

Platz-/Werkstückidentifizierung:
Vorteilhaft sind die Fahrzeugkarosserieaufnahmen mit einem Identifizierungselement wie beispielsweise einem optischen Code, einem funkbasierten aktiven/passiven Identträger versehen, um deren Position innerhalb des Flächenspeicherbereiches zu erfassen. Die Erfassung kann durch ein oder mehrere stationäre oder mobile Erfassungsgeräte erfolgen. Mobile Erfassungsgeräte können von Personen bewegt werden oder an Flurförderfahrzeugen befestigt sein.

Sind die Erfassungsgeräte zum Beispiel an einem Flurförderfahrzeug befestigt, kann dieses Flurförderfahrzeug innerhalb des Flächenspeicherbereiches eine Identifikationsfahrt machen, um so die Position der jeweiligen Fahrzeugkarosserieaufnahmen zu erfassen und an die Flächenspeichersteuerung zu übergeben.

Es ist günstig, wenn das Flurförderfahrzeug auch mit einer Erkennungssensorik ausgestattet ist, welche eine Lageerkennung (Orientierungserkennung) der Fahrzeugkarosserieaufnahme ermöglicht. Eine Fahrzeugkarosserieidentifizierung kann ebenfalls durch eine entsprechende Ident-Träger/Lesegerät-Konstellation zwischen Fahrzeugkarosserie und Flurförderfahrzeug erfolgen.

Energieversorgung:
Vorteilhaft ist ein Akku-System für die Flurförderfahrzeuge. Ein kondensatorbasiertes System ist besonders für zum Beispiel spezielle Umlagerfahrzeuge von Vorteil.

Es kann günstig sein, wenn zumindest ein Speicherplatz mit einer Ladekomponente für die Flurförderfahrzeuge ausgerüstet ist.

Vorzugsweise erfolgt die Energieversorgung der Flurförderfahrzeuge außerhalb des Flächenspeichers wie zum Beispiel Lastwechselpositionen und / oder Wartebereichen oder Bearbeitungsplätzen.

Zur Energieversorgung kann teilweise auch eine photovoltaische Komponente genutzt werden. Dabei kann der Energiespeicher des Flurförderfahrzeugs von den photovoltaischen Komponenten geladen werden und auch als Energiespeicher für andere Verbraucher dienen. Dies ist besonders vorteilhaft, wenn das Flurförderfahrzeug in Ruhezeiten zumindest einen Teil seiner Energie in das Produktionsnetz zurückspeichern kann.

Steuerung:
Es kann günstig sein, wenn in Zeiträumen mit wenig Transportbedarf nicht benötigte Flurförderfahrzeuge im Flächenspeicherbereich unterhalb der Aufnahmen in Warteposition stehen.

Anhand des aktuellen Füllgrades des Flächenspeichers kann neben einem manuellen Anstoß durch Bedienpersonal auch durch vor- oder nachgeordnete Produktionssysteme eine Verlagerung von Flächenspeichersegmenten in andere räumliche Bereiche oder eine Umlagerung innerhalb des bestehenden Flächenspeicherbereiches zur Kapazitätsanpassung erfolgen.

Schnittstellen mit anderen Gewerken:
Bei der Ausführungsform mit einer ortsfesten Fahrzeugkarosserieaufnahme kann die Fahrzeugkarosserie mit oder ohne Skid von einer externen Übergabestation an das Flurförderfahrzeug übergeben werden. Es erfolgt eine Zufahrt zum Flächenspeicher. Der endgültige Speicherplatz wird entweder vorher vom System festgelegt oder während des Aufenthaltes im Bereich situationsbezogen (kürzester Weg, Verfügbarkeiten, vorausschauende Auslagerung) bei mehr als einem freiem Speicherplatz gewählt.

Die Auslagerung erfolgt nach ähnlichen Kriterien, jedoch bezogen auf das Flurförderfahrzeug, da die angeforderte Fahrzeugkarosserie und deren Speicherplatz festliegt.

Befinden sich bei mehreren Flächenspeichersegmenten diese auf unterschiedlichen Flurförderfahrzeug-Fahrebenen und sind diese nur über Vertikalumsetzungen erreichbar, so gibt es verschieden Varianten: Das Flurförderfahrzeug kann beispielsweise mit Vertikalumsetzer in einer andere Ebene umgesetzt und somit mehrere Flächenspeichersegmente bedienen.

Alternativ kann das Flurförderfahrzeug eine Fahrzeugkarosserie an einen Vertikalumsetzer übergeben und in seiner Ebene verbleiben. Die Fahrzeugkarosserie wird in einer anderen Ebene von einem weiterem Flurförderfahrzeug in den Flächenspeicherbereich in eine andere Ebene übernommen.

Dies gilt auch analog bei nur einem Flächenspeicher in einer Fahrebene und vor- / nachgelagerten Bearbeitungsprozessen in anderen Ebenen die mit FTF bedient werden

## Patentansprüche

1. Flächenspeicher (30, 30") zur Lagerung von Fahrzeugkarosserien (36), deren Längsausdehnung mindestens das Anderthalbfache der Querausdehnung beträgt, umfassend
a) eine Lagerfläche (24) mit mindestens zwei Speicherplätzen (10.1-10.12) und zwei zugehörigen Fahrzeugkarosserieaufnahmen (32, 32'), wobei die Lagerfläche (24) so ausgelegt ist, dass auf der Lagerfläche Fahrzeugkarosserien in einer Ebene auf den mindestens zwei Speicherplätzen auf jeweils einer der Fahrzeugkarosserieaufnahmen lagerbar sind,
b) mindestens ein mehrspuriges Flurförderfahrzeug (34), das mit einer Fahrzeugkarosserie oder/und der Fahrzeugkarosserieaufnahme (32, 32') koppelbar ist, **dadurch gekennzeichnet, dass**
c) das Flurförderfahrzeug (34) derart für ein omnidirektionales Fahren ausgelegt ist, dass die Förderrichtung unabhängig von der Ausrichtung des Flurförderfahrzeugs (34) wählbar ist und
d) bei dem Flurförderfahrzeug (34) mit gekoppelter Fahrzeugkarosserie oder Fahrzeugkarosserieaufnahme (32, 32') eine Förderrichtungsänderung ohne eine Änderung der Relativausrichtung von Fahrzeugkarosserie oder/und Fahrzeugkarosserieaufnahme und Flurförderfahrzeug durchführbar ist.

2. Flächenspeicher nach Anspruch 1, wobei das Flurförderfahrzeug (34) und die Fahrzeugkarosserie oder die Fahrzeugkarosserieaufnahme (32, 32') so ausgelegt sind, dass die Fahrzeugkarosserie oder die Fahrzeugkarosserieaufnahme von dem Flurförderfahrzeug unterfahrbar ist.

3. Flächenspeicher nach einem der vorhergehenden Ansprüche, wobei die Fahrzeugkarosserie oder die Fahrzeugkarosserieaufnahme (32, 32') aus einer ersten Förderrichtung und einer zweiten Förderrichtung unterfahrbar ist, wobei die erste Förderrichtung und die zweite Förderrichtung einen Winkel von mindestens 60°, bevorzugt von 90°, einschließen.

4. Flächenspeicher nach einem der vorhergehenden Ansprüche, wobei die Fahrzeugkarosserieaufnahme (32, 32') zumindest zwei Stützbereiche (42) aufweist.

5. Flächenspeicher nach Anspruch 4, wobei die Stützbereiche (42) so angeordnet und ausgelegt sind, dass das Flurförderfahrzeug (34) zwischen zwei Stützbereichen (42) zu einer Halteposition entlang einer ersten Förderrichtung fahren und die Halteposition in einer zweiten Förderrichtung verlassen kann.

6. Flächenspeicher nach einem der vorhergehenden Ansprüche, wobei die Fahrzeugkarosserieaufnahmen (32) ortsfest auf der Lagerfläche montiert sind.

7. Flächenspeicher nach einem der Ansprüche 1 bis 5, wobei die Fahrzeugkarosserieaufnahmen (32') von dem Flurförderfahrzeug (34) innerhalb der Lagerfläche bewegbar sind.

8. Flächenspeicher nach einem der vorhergehenden Ansprüchen, wobei die Lagerfläche mittels des Flurförderfahrzeugs örtlich verlagerbar oder/und teilbar ist.

9. Flächenspeicher nach einem der vorhergehenden Ansprüche, wobei der von einem Speicherplatz belegte Lagerflächenanteil von der Größe der entsprechenden Fahrzeugkarosserie und einem zusätzlichen Funktionszuschlagsanteil bestimmt ist.

10. Flächenspeicher nach Anspruch 9, wobei der Funktionszuschlagsanteil variierbar ist.

11. Flächenspeicher nach einem der vorhergehenden Ansprüche, wobei die Anzahl an Speicherplätzen je Lagerfläche lokal oder insgesamt variierbar ist..

12. Flächenspeicher nach einem der vorhergehenden Ansprüche, wobei der Flächenspeicher zwischen den Prozessen Rohbaufertigung und Lackierung, innerhalb des Lackierprozesses oder/und zwischen den Prozessen Lackierung und Endmontage angeordnet sein kann.

13. Verfahren zum Fördern von Fahrzeugkarosserien oder/und Fahrzeugkarosserieaufnahmen, mit den Schritten:
- Koppeln Fahrzeugkarosserie oder/und einer Fahrzeugkarosserieaufnahme mit einem omnidirektional verfahrbaren Flurförderfahrzeug;
- Fördern der Fahrzeugkarosserie oder/und der Fahrzeugkarosserieaufnahme in einer ersten Förderrichtung;
- Ändern der ersten Förderrichtung in eine zweite Förderrichtung bei gleichbleibender Relativausrichtung von Fahrzeugkarosserie oder/und Fahrzeugkarosserieaufnahme und Flurförderfahrzeug.

## Claims

1. Area storage (30, 30") for storing vehicle bodies (36), the longitudinal extension of which is at least one and a half times the transverse extension, comprising
a) a storage area (24) with at least two storage places (10.1 - 10.12) and two associated vehicle body mounts (32, 32'), wherein the storage area (24) is configured such that vehicle bodies can be stored on the storage area in one level on the at least two storage places on one of the vehicle body mounts in each case,
b) at least one multi-track floor conveyor vehicle (34), which can be coupled to a vehicle body and/or the vehicle body mount (32, 32'), **characterized in that**
c) the floor conveyor vehicle (34) is configured for omnidirectional travel such that the direction of conveyance can be selected independently of the orientation of the floor conveyor vehicle (34) and
d) in the case of the floor conveyor vehicle (34) with the coupled vehicle body or vehicle body mount (32, 32'), a change in the direction of conveyance can be performed without a change in the relative orientation of vehicle body and/or vehicle body mount and floor conveyor vehicle.

2. Area storage according to claim 1, wherein the floor conveyor vehicle (34) and the vehicle body or the vehicle body mount (32, 32') are configured such that the vehicle body or the vehicle body mount can be traveled under by the floor conveyor vehicle.

3. Area storage according to one of the preceding claims, wherein the vehicle body or the vehicle body mount (32, 32') can be traveled under from a first direction of conveyance and a second direction of conveyance, wherein the first direction of conveyance and the second direction of conveyance form an angle of at least 60°, preferably 90°.

4. Area storage according to one of the preceding claims, wherein the vehicle body mount (32, 32') comprises at least two support areas (42).

5. Area storage according to claim 4, wherein the support areas (42) are arranged and configured such that the floor conveyor vehicle (34) can travel between two support areas (42) to a stop position along a first direction of conveyance and can leave the stop position in a second direction of conveyance.

6. Area storage according to one of the preceding claims, wherein the vehicle body mounts (32) are mounted stationarily on the storage area.

7. Area storage according to one of claims 1 to 5, wherein the vehicle body mounts (32') can be moved by the floor conveyor vehicle (34) within the storage area.

8. Area storage according to one of the preceding claims, wherein the storage area can be relocated locally and/or divided by means of the floor conveyor vehicle.

9. Area storage according to one of the preceding claims, wherein the portion of the storage area occupied by a storage place is determined by the size of the corresponding vehicle body and an additional function supplement portion.

10. Area storage according to claim 9, wherein the function supplement portion is variable.

11. Area storage according to one of the preceding claims, wherein the number of storage places per storage area can be varied locally or in total.

12. Area storage according to one of the preceding claims, wherein the area storage can be arranged between the processes of body-in-white production and painting, within the painting process and/or between the processes of painting and final assembly.

13. Method for conveying vehicle bodies or/and vehicle body mounts, with the steps of:
- coupling a vehicle body and/or a vehicle body mount with an omnidirectionally movable floor conveyor vehicle;
- conveying the vehicle body or/and the vehicle body mount in a first direction of conveyance;
- changing the first direction of conveyance into a second direction of conveyance while maintaining the same relative orientation of the vehicle body or/and the vehicle body mount and the floor conveyor vehicle.

## Revendications

1. Dispositif de stockage plan (30, 30") destiné au stockage de carrosseries de véhicules (36), dont l'étendue longitudinale est égale à au moins une fois et demie l'étendue transversale, comprenant
a) une surface de stockage (24) dotée d'au moins deux emplacements de stockage (10.1 - 10.12) et de deux logements de carrosserie de véhicule associés (32, 32'), dans laquelle la surface de stockage (24) est conçue de telle sorte que, sur la surface de stockage, des carrosseries de véhicule peuvent être stockés dans un plan en au moins deux emplacements de stockage sur respectivement l'un des logements de carrosserie de véhicule,
b) au moins un chariot de manutention multivoie (34) pouvant être couplé à une carrosserie de véhicule ou/et un logement de carrosserie de véhicule (32, 32"),
**caractérisé en ce que**
c) le chariot de manutention (34) est conçu pour un déplacement omnidirectionnel de telle sorte que la direction de transport est sélectionnable indépendamment de l'orientation du chariot de manutention (34), et
d) sur le chariot de manutention (34) avec carrosserie de véhicule ou logement de carrosserie de véhicule couplées (32, 32'), un changement de direction de transport est réalisable sans changement de l'orientation relative de la carrosserie de véhicule ou/et du logement de carrosserie de véhicule et du chariot de manutention.

2. Dispositif de stockage plan selon la revendication 1, dans lequel le chariot de manutention (34) et la carrosserie de véhicule ou le logement de carrosserie de véhicule (32, 32') sont conçus de manière à ce que le chariot de manutention (34) est déplaçable sous la carrosserie de véhicule ou le logement de carrosserie de véhicule.

3. Dispositif de stockage plan selon l'une quelconque des revendications précédentes, dans lequel on peut passer sous la carrosserie de véhicule ou le logement de carrosserie de véhicule (32, 32') à partir d'une première direction de transport et d'une seconde direction de transport, dans lequel la première direction de transport et la seconde direction de transport forment un angle d'au moins 60°, de préférence de 90°.

4. Dispositif de stockage plan selon l'une quelconque des revendications précédentes, dans lequel le logement de carrosserie de véhicule (32, 32') comporte au moins deux zones de support (42).

5. Dispositif de stockage plan selon la revendication 4, dans lequel les zones de support (42) sont agencées et conçues de telle sorte, que le chariot de manutention (34) puisse se déplacer entre deux zones de support (42) vers une position d'arrêt le long d'une première direction de transport, et puisse quitter la position d'arrêt dans une deuxième direction de transport.

6. Dispositif de stockage plan selon l'une quelconque des revendications précédentes, dans lequel les logements de carrosserie de véhicule (32') sont montés de manière fixe sur la surface de stockage.

7. Dispositif de stockage plan selon l'une quelconque des revendications 1 à 5, dans lequel les logements de carrosserie de véhicule (32') sont déplaçables par le chariot de manutention (34) dans la surface de stockage.

8. Dispositif de stockage plan selon l'une quelconque des revendications précédentes, dans lequel la surface de stockage peut être relocalisée localement ou/et divisée au moyen du chariot de manutention.

9. Dispositif de stockage plan selon l'une quelconque des revendications précédentes, dans lequel la part de surface de stockage, occupée par un emplacement de stockage, est déterminée par la taille de la carrosserie de véhicule correspondante et par une part supplémentaire de supplément de fonction.

10. Dispositif de stockage plan selon la revendication 9, dans lequel la part supplémentaire de supplément de fonction est variable.

11. Dispositif de stockage plan selon l'une quelconque des revendications précédentes, dans lequel le nombre d'emplacements de stockage par surface de stockage est variable localement ou au total.

12. Dispositif de stockage plan selon l'une quelconque des revendications précédentes, dans lequel le dispositif de stockage plan peut être disposé entre les processus de fabrication *body-in-white* et de peinture, dans le processus de peinture ou/et entre les processus de peinture et de montage final.

13. Procédé de transport de carrosseries de véhicules ou/et des logements de carrosserie de véhicule, avec les étapes :
- couplage de la carrosserie de véhicule ou/et d'un logement de carrosserie de véhicule avec un chariot de manutention à déplacement omnidirectionnel ;
- transport de la carrosserie de véhicule ou/et du logement de carrosserie de véhicule dans un premier direction de transport ;
- changement de la première direction de transport dans une seconde direction de transport à orientation relative constante de la carrosserie de véhicule ou/et du logement de carrosserie de véhicule et du chariot de manutention.
